(19) Europäisches Patentamt / European Patent Office / Office européen des brevets

(11) **EP 4 769 864 A1**

(12) **EUROPEAN PATENT APPLICATION**
published in accordance with Art. 153(4) EPC

(43) Date of publication:
**01.07.2026 Bulletin 2026/27**

(21) Application number: **24867514.2**

(22) Date of filing: **19.09.2024**

(51) International Patent Classification (IPC):
*H02J 3/32* *(2026.01)*

(52) Cooperative Patent Classification (CPC):
**H02J 3/32**

(86) International application number:
**PCT/CN2024/119855**

(87) International publication number:
**WO 2025/061109 (27.03.2025 Gazette 2025/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **19.09.2023 CN 202311213826**

(71) Applicants:
• **Contemporary Amperex Future Energy Research Institute (Shanghai) Limited**
**Shanghai 200241 (CN)**
• **Contemporary Amperex Technology Co., Limited**
**Fujian 352100 (CN)**

(72) Inventors:
• **GUO, Zide**
**Shanghai 200241 (CN)**
• **LIU, Qiang**
**Shanghai 200241 (CN)**
• **LU, Yanhua**
**Shanghai 200241 (CN)**
• **YU, Dongxu**
**Shanghai 200241 (CN)**

(74) Representative: **Gong, Jinping**
**CocreateIP**
**Neumarkter Straße 21**
**81673 München (DE)**

(54) **HIGH-VOLTAGE DIRECT-CONNECTED ENERGY STORAGE SYSTEM, AND CONTROL METHOD AND DEVICE FOR ENERGY STORAGE DEVICE**

(57) The present application relates to a high-voltage direct-mount energy storage system, a control method for an energy storage apparatus, and a control apparatus for an energy storage apparatus. The high-voltage direct-mount energy storage system may include: a clamping circuit; an energy storage apparatus, including a first energy storage main line, at least two energy storage sub-modules connected to the first energy storage main line, at least one dielectric branch, a first node disposed on the first energy storage main line, and a first grounding circuit connected to the first node, with a resistance value of the first grounding circuit being less than a preset resistance threshold; and a control apparatus, configured to control target engaged energy storage sub-modules on the two sides of the first node to be in a connected state based on an expected voltage of the energy storage apparatus and measured voltages of at least two energy storage sub-modules connected to the first energy storage main line. Embodiments of the present application can improve the stability of the voltage at the two ends of the energy storage apparatus, thereby facilitating improvement of operational reliability of components within the energy storage apparatus.

FIG. 3

EP 4 769 864 A1

# Description

## CROSS-REFERENCE TO RELATED APPLICATIONS

The present application claims priority to Chinese Patent Application No. 2023112138261, filed on September 19, 2023, and titled "ENERGY STORAGE VALVE, CONTROL METHOD, CONTROL APPARATUS, AND ENERGY STORAGE APPARATUS," which is incorporated herein by reference in its entirety.

## TECHNICAL FIELD

The present application relates to the field of energy storage technology, and particularly, to a high-voltage direct-mount energy storage system, a control method for an energy storage apparatus, and a control apparatus for an energy storage apparatus.

## BACKGROUND

With the development of energy storage technology, direct-current direct-mount energy storage apparatuses have become commonly used components in energy storage technology. Such direct-current direct-mount energy storage apparatuses can independently exchange energy with a direct-current grid or cooperate with other components (for example, converter valves) to exchange energy with an alternating-current grid.

In the prior art, two ends of a direct-current direct-mount energy storage apparatus may be grounded through a large resistor (also referred to as a clamping resistor) to clamp the voltage at two ends of the energy storage apparatus to a preset voltage. However, the voltage at the two ends of the direct-current direct-mount energy storage apparatus in related technologies is unstable, which may affect the operational reliability of components within the energy storage apparatus.

## SUMMARY

In view of the above issues, the present application provides a high-voltage direct-mount energy storage system, a control method for an energy storage apparatus, and a control apparatus for an energy storage apparatus, so as to address the issue in related technologies where voltage instability at two ends of the energy storage apparatus may affect the operational reliability of components within the energy storage apparatus.

According to a first aspect, the present application provides a high-voltage direct-mount energy storage system, including:

a clamping circuit, including a first clamping branch and a second clamping branch; an energy storage apparatus, including a first energy storage main line and at least two energy storage sub-modules connected to the first energy storage main line, with both ends of the first energy storage main line respectively connected to the clamping circuit; and at least one dielectric branch, with one end of the dielectric branch connected to at least one of the energy storage sub-modules and the other end coupled to a reference ground; and further including a first node disposed on the first energy storage main line and a first grounding circuit connected to the first node, with a resistance value of the first grounding circuit being less than a preset resistance threshold; and a control apparatus, configured to control target engaged energy storage sub-modules on the two sides of the first node to be in a connected state based on an expected voltage of the energy storage apparatus and measured voltages of at least two energy storage sub-modules connected to the first energy storage main line, where a difference between the total voltage magnitudes of the target engaged energy storage sub-modules on the two sides of the first node is less than a preset threshold, and a difference between a total voltage and the expected voltage of the energy storage apparatus is less than a preset difference.

In embodiments of the present application, the high-voltage direct-mount energy storage system may include a clamping circuit, an energy storage apparatus, and a control apparatus. The energy storage apparatus includes a first energy storage main line with two ends respectively connected to the clamping circuit, at least two energy storage sub-modules connected to the first energy storage main line, at least one dielectric branch, a first node disposed on the first energy storage main line, and a first grounding circuit connected to the first node, with a resistance value of the first grounding circuit being less than a preset resistance threshold, so that the leakage current generated by the dielectric branches may flow back to the first energy storage main line in the energy storage apparatus through the first grounding circuit and the first node, rather than flowing back to the first energy storage main line in the energy storage apparatus through the clamping circuit. As a result, the voltage at two ends of the energy storage apparatus will not experience significant deviation, which reduces the impact of the equivalent grounding resistance of the cooling water pipeline on the clamping effect of the clamping resistors, thereby facilitating improvement of the stability of the voltage at the two ends of the energy storage apparatus. In addition, the control apparatus controls the target engaged energy storage sub-modules on the two sides of the first node to be in a connected state based on the expected voltage of the energy storage apparatus and the measured voltages of at least two energy storage sub-modules connected to the first energy storage main line, where a difference between the total voltage magnitudes of the target engaged energy storage sub-modules on the two sides of the first node is less than a preset threshold, and a difference between the total voltage and the expected voltage of the energy storage apparatus is less than a preset difference. As a result, the voltage at the two ends of the energy storage apparatus can be substantially stably controlled at the corresponding expected voltage. It can be seen that the embodiments of the present application can improve the stability of the voltage at the two ends of the energy storage apparatus, thereby facilitating improvement of operational reliability of components within the energy storage apparatus.

In some embodiments, the total voltage magnitude of the energy storage sub-modules on each side of the first node is greater than or equal to one-half of the expected voltage of the energy storage apparatus, so that the total voltage magnitude of the target engaged energy storage sub-modules on the two sides of the first node can respectively reach one-half of the expected voltage of the energy storage apparatus, thereby making the total voltage of the energy storage apparatus substantially equal to the expected voltage.

In some embodiments, the deviation percentage of the measured voltages of each energy storage sub-module is less than 10%, and the numbers of the target engaged energy storage sub-modules on the two sides of the first node are equal or differ by 1. This ensures that, in cases of fluctuations in the switching state and/or switching position of the energy storage sub-modules within the energy storage apparatus, the difference between the total voltage magnitudes of the target engaged energy storage sub-modules on the two sides of the first node is less than the preset threshold, and the difference between the total voltage and the expected voltage of the energy storage apparatus is less than the preset difference. As a result, the voltage at the two ends of the energy storage apparatus can be substantially stably controlled at the corresponding expected voltage without being affected by changes in the equivalent grounding resistance of the cooling water pipeline, changes in the switching state of the energy storage sub-modules, and/or changes in the switching position, thereby facilitating further improvement of the stability of the voltage at the two ends of the energy storage apparatus.

In some embodiments, the first grounding circuit is a wire, or includes a grounding resistor or a grounding reactor.

In some embodiments, the preset resistance threshold is a product of a resistance value of the first clamping branch and 0.02; optionally, the preset resistance threshold is a product of the resistance value of the first clamping branch and 0.001.

In some embodiments, the first grounding circuit further includes a current detection unit, configured to detect a current parameter on the first grounding circuit between the first node and the reference ground, so as to timely monitor whether a ground short circuit occurs inside the energy storage apparatus, and to perform short-circuit protection promptly when a ground short circuit is detected inside the energy storage apparatus, thereby further facilitating the protection of the energy storage apparatus.

In some embodiments, the energy storage apparatus further includes at least one second energy storage main line and at least two energy storage sub-modules connected to the second energy storage main line, the second energy storage main line being connected in parallel with the first energy storage main line.

In some embodiments, the energy storage apparatus further includes a second node disposed on the second energy storage main line and a second grounding circuit connected to the second node, with a resistance value of the second grounding circuit being less than the preset resistance threshold, so that the leakage current generated by the dielectric branches may flow back to the second energy storage main line in the energy storage apparatus through the second grounding circuit and the second node, rather than flowing back to the second energy storage main line in the energy storage apparatus through the clamping circuit. As a result, the voltage at the two ends of the energy storage apparatus will not experience significant deviation, which reduces the impact of the equivalent grounding resistance of the cooling water pipeline on the clamping effect of the clamping resistors, thereby facilitating improvement of the stability of the voltage at the two ends of the energy storage apparatus. In addition, the second grounding circuit is disposed in such a way that the leakage current generated by the dielectric branches connected to the energy storage sub-modules on the second energy storage main line may flow back to the second energy storage main line in the energy storage apparatus through a shorter path, which helps reduce the energy consumption of the energy storage apparatus.

In some embodiments, the total voltage magnitude of the energy storage sub-modules on each side of the second node is greater than or equal to one-half of the expected voltage of the energy storage apparatus, so that the total voltage magnitude of the target engaged energy storage sub-modules on two sides of the second node can respectively reach one-half of the expected voltage of the energy storage apparatus, thereby making the total voltage of the energy storage apparatus substantially equal to the expected voltage.

In some embodiments, the high-voltage direct-mount energy storage system further includes a converter valve, a positive direct-current bus, and a negative direct-current bus, with a first end of the converter valve connected to the positive direct-current bus, a second end of the converter valve connected to the negative direct-current bus, a third end of the converter valve connected to an alternating-current grid, and both ends of the first energy storage main line respectively connected to the positive direct-current bus and the negative direct-current bus.

In some embodiments, the dielectric branch includes at least one of a cooling branch, a fire-fighting branch, and a heat-transfer medium branch.

According to a second aspect, the present application provides a control method for an energy storage apparatus, where the energy storage apparatus is the energy storage apparatus in the high-voltage direct-mount energy storage system according to any one of the first aspect, and the method includes:

acquiring an expected voltage of the energy storage apparatus;
acquiring measured voltages of at least two energy storage sub-modules connected to a first energy storage main line of the energy storage apparatus; and
controlling target engaged energy storage sub-modules on two sides of a first node in the first energy storage main line to be in a connected state based on the expected voltage and the measured voltages of at least two energy storage sub-modules, where a difference between the total voltage magnitudes of the target engaged energy storage sub-modules on the two sides of the first node is less than a preset threshold, and a difference between a total voltage and the expected voltage of the energy storage apparatus is less than a preset difference.

In embodiments of the present application, the expected voltage of the energy storage apparatus and the measured voltages of at least two energy storage sub-modules connected to the first energy storage main line of the energy storage apparatus are acquired. Further, the target engaged energy storage sub-modules on the two sides of the first node in the first energy storage main line are controlled to be in a connected state based on the expected voltage and the measured voltages of at least two energy storage sub-modules, where a difference between the total voltage magnitudes of the target engaged energy storage sub-modules on the two sides of the first node is less than a preset threshold, and a difference between the total voltage and the expected voltage of the energy storage apparatus is less than a preset difference. As a result, the voltage at the two ends of the energy storage apparatus can be substantially stably controlled at the corresponding expected voltage. It can be seen that the embodiments of the present application can improve the stability of the voltage at the two ends of the energy storage apparatus, thereby facilitating improvement of operational reliability of components within the energy storage apparatus.

In some embodiments, the controlling target engaged energy storage sub-modules on two sides of a first node in the first energy storage main line to be in a connected state based on the expected voltage and the measured voltages of at least two energy storage sub-modules includes:

determining the number of target engaged energy storage sub-modules on a first side of the first node and the number of target engaged energy storage sub-modules on a second side of the first node based on the expected voltage and the measured voltages of the energy storage sub-modules; and
controlling the target engaged energy storage sub-modules on the two sides of the first node in the first energy storage main line to be in a connected state based on the number of target engaged energy storage sub-modules on the first side of the first node and the number of target engaged energy storage sub-modules on the second side of the first node.

In embodiments of the present application, by controlling the target engaged energy storage sub-modules on the two sides of the first node in the first energy storage main line to be in a connected state based on the determined number of target engaged energy storage sub-modules on the two sides of the first node, in cases of fluctuations in the switching state and/or switching position of the energy storage sub-modules within the energy storage apparatus, the voltage at the two ends of the energy storage apparatus can be substantially stably controlled at the corresponding expected voltage, thereby facilitating further improvement of the stability of the voltage at the two ends of the energy storage apparatus.

In some embodiments, the determining the number of target engaged energy storage sub-modules on the first side of the first node and the number of target engaged energy storage sub-modules on the second side of the first node based on the expected voltage and the measured voltages of the energy storage sub-modules includes:

determining a first average voltage of the energy storage sub-modules based on the measured voltages of the energy storage sub-modules when a deviation percentage of the measured voltages of each energy storage sub-module is less than 10%;
determining a total number of target engaged energy storage sub-modules on the two sides of the first node based on the expected voltage and the first average voltage; and
determining the number of target engaged energy storage sub-modules on the first side of the first node and the number of target engaged energy storage sub-modules on the second side of the first node based on the total number.

In embodiments of the present application, by determining, according to an overall voltage control sub-strategy, the number of target engaged energy storage sub-modules on the first side of the first node and the number of target engaged energy storage sub-modules on the second side of the first node based on the expected voltage and the first average voltage of the energy storage sub-modules, the number of target engaged energy storage sub-modules on the first side of the first node and the number of target engaged energy storage sub-modules on the second side of the first node can be determined more comprehensively and reasonably.

In some embodiments, the determining the number of target engaged energy storage sub-modules on the first side of the first node and the number of target engaged energy storage sub-modules on the second side of the first node based on the total number includes:

under the condition that the total number is even, determining that the number of target engaged energy storage sub-modules on the first side of the first node and the number of target engaged energy storage sub-modules on the second side of the first node are both equal to one-half of the total number; and

under the condition that the total number is odd, determining that the number of target engaged energy storage sub-modules on the first side of the first node and the number of target engaged energy storage sub-modules on the second side of the first node are respectively equal to respective different values of one-half of a difference between the total number and a preset value and one-half of a sum of the total number and the preset value.

In some embodiments, the determining the number of target engaged energy storage sub-modules on a first side of the first node based on the expected voltage and the measured voltages of the energy storage sub-modules includes:

determining a second average voltage of the energy storage sub-modules on the first side based on the measured voltages of the energy storage sub-modules on the first side of the first node when a deviation percentage of the measured voltages of each energy storage sub-module on the first side of the first node is less than 10%; and

determining the number of target engaged energy storage sub-modules on the first side of the first node based on the expected voltage and the second average voltage.

In embodiments of the present application, by determining, according to a grouped voltage control sub-strategy, the number of target engaged energy storage sub-modules on the first side of the first node based on the expected voltage and the measured voltages of the energy storage sub-modules on the first side of the first node, the number of target engaged energy storage sub-modules on the first side of the grounding point can be determined more flexibly and accurately.

In some embodiments, the determining the number of target engaged energy storage sub-modules on the second side of the first node based on the expected voltage and the measured voltages of the energy storage sub-modules includes:

determining a third average voltage of the energy storage sub-modules on the second side based on the measured voltages of the energy storage sub-modules on the second side of the first node when a deviation percentage of the measured voltages of each energy storage sub-module on the second side of the first node is less than 10%; and

determining the number of target engaged energy storage sub-modules on the second side of the first node based on the expected voltage and the third average voltage.

In embodiments of the present application, by determining, according to a grouped voltage control sub-strategy, the number of target engaged energy storage sub-modules on the second side of the first node based on the expected voltage and the measured voltages of the energy storage sub-modules on the second side of the first node, the number of target engaged energy storage sub-modules on the second side of the first node can be determined more flexibly and accurately.

In some embodiments, the controlling the target engaged energy storage sub-modules on the two sides of the first node in the first energy storage main line to be in a connected state based on the number of target engaged energy storage sub-modules on the first side of the first node and the number of target engaged energy storage sub-modules on the second side of the first node includes:

acquiring a charge-discharge state of the energy storage apparatus and a measured SOC of each of the energy storage sub-modules; and

controlling the target engaged energy storage sub-modules on the two sides of the first node in the first energy storage main line to be in a connected state based on the number of target engaged energy storage sub-modules on the first side of the first node, the number of target engaged energy storage sub-modules on the second side of the first node, the charge-discharge state of the energy storage apparatus, and the measured SOC of each of the energy storage sub-modules.

In embodiments of the present application, by further considering the measured SOC of each of the energy storage sub-modules and the charge-discharge state of the energy storage apparatus on the basis of the number of target engaged energy storage sub-modules on the first side of the first node and the number of target engaged energy storage sub-modules on the second side of the first node, charging or discharging can be performed on the energy storage sub-modules on the two sides of the first node that require charging or discharging more urgently, thereby not only facilitating improvement of the stability of the voltage at the two ends of the energy storage apparatus but also facilitating improvement of charge-discharge balance among the energy storage sub-modules of the energy storage apparatus.

In some embodiments, the controlling the target engaged energy storage sub-modules on the two sides of the first node in the first energy storage main line to be in a connected state based on the number of target engaged energy storage sub-modules on the first side of the first node, the number of target engaged energy storage sub-modules on the second side of the first node, the charge-discharge state of the energy storage apparatus, and the measured SOC of each of the energy storage sub-modules includes:

when the charge-discharge state of the energy storage apparatus is a charging state, selecting the first n1 energy storage sub-modules on the first side of the first node as target engaged sub-modules according to an ascending order of measured SOCs of the energy storage sub-modules on the first side of the first node, and controlling each of the target engaged sub-modules to be in a connected state, where n1 is the number of target engaged energy storage sub-modules on the first side of the first node; and

selecting the first n2 energy storage sub-modules on the second side of the first node as target engaged sub-modules according to an ascending order of measured SOCs of the energy storage sub-modules on the second side of the first node, and controlling each of the target engaged sub-modules to be in a connected state, where n2 is the number of target engaged energy storage sub-modules on the second side of the first node.

In embodiments of the present application, when the charge-discharge state of the energy storage apparatus is a charging state, by further considering the measured SOC of each of the energy storage sub-modules on the basis of the number of target engaged energy storage sub-modules on the two sides of the first node, a plurality of energy storage sub-modules with relatively lower measured SOC on the two sides of the first node can be selected as target engaged energy storage sub-modules for charging, thereby not only facilitating improvement of the stability of the voltage at the two ends of the energy storage apparatus but also facilitating improvement of charging balance among the energy storage sub-modules on the two sides of the first node.

In some embodiments, the controlling the target engaged energy storage sub-modules on the two sides of the first node in the first energy storage main line to be in a connected state based on the number of target engaged energy storage sub-modules on the first side of the first node, the number of target engaged energy storage sub-modules on the second side of the first node, the charge-discharge state of the energy storage apparatus, and the measured SOC of each of the energy storage sub-modules includes:

when the charge-discharge state of the energy storage apparatus is a discharging state, selecting the first n1 energy storage sub-modules on the first side of the first node as target engaged sub-modules according to a descending order of measured SOCs of the energy storage sub-modules on the first side of the first node, and controlling each of the target engaged sub-modules to be in a connected state; and

selecting the first n2 energy storage sub-modules on the second side of the first node as target engaged sub-modules according to a descending order of measured SOCs of the energy storage sub-modules on the second side of the first node, and controlling each of the target engaged sub-modules to be in a connected state.

In embodiments of the present application, when the charge-discharge state of the energy storage apparatus is a discharging state, by further considering the measured SOC of each of the energy storage sub-modules on the basis of the number of target engaged energy storage sub-modules on the second side of the first node, a plurality of energy storage sub-modules with relatively higher measured SOC on the two sides of the first node can be selected as target engaged energy storage sub-modules for discharging, thereby not only facilitating improvement of the stability of the voltage at the two ends of the energy storage apparatus but also facilitating improvement of charging balance among the energy storage sub-modules on the two sides of the first node.

According to a third aspect, the present application provides a control apparatus for an energy storage apparatus, where the energy storage apparatus is the energy storage apparatus in the high-voltage direct-mount energy storage system according to any one of the first aspect, and the control apparatus includes:

a first acquisition module, configured to acquire an expected voltage of the energy storage apparatus;

a second acquisition module, configured to acquire measured voltages of at least two energy storage sub-modules connected to a first energy storage main line of the energy storage apparatus; and

a control module, configured to control target engaged energy storage sub-modules on two sides of a first node in the first energy storage main line to be in a connected state based on the expected voltage and the measured voltages of at least two energy storage sub-modules, where a difference between the total voltage magnitudes of the target engaged energy storage sub-modules on the two sides of the first node is less than a preset threshold, and a difference between a total voltage and the expected voltage of the energy storage apparatus is less than a preset difference.

The above description is merely an overview of the technical solutions of the present application. To provide a clearer understanding of the technical means of the present application, the content of the specification can be implemented, and to make the above and other objectives, features, and advantages of the present application more apparent and understandable, specific embodiments of the present application are provided below.

## BRIEF DESCRIPTION OF DRAWINGS

Various other advantages and benefits will become apparent to those of ordinary skill in the art upon reading the detailed description of the preferred embodiments below. The drawings are provided solely for the purpose of illustrating the preferred embodiments and are not to be construed as limiting the present application. Throughout the drawings, the same reference numerals denote the same components. In the drawings:

FIG. 1 is a schematic structural diagram of a direct-current direct-mount energy storage apparatus according to the prior art;
FIG. 2 is a schematic structural diagram of equivalent grounding resistors and clamping resistors of the cooling water pipeline in an energy storage valve cooling system according to the prior art;
FIG. 3 is a schematic structural diagram of a high-voltage direct-mount energy storage system according to some embodiments of the present application;
FIG. 4 is a schematic structural diagram of an energy storage sub-module according to some embodiments of the present application;
FIG. 5 is a schematic structural diagram of an energy storage sub-module according to other embodiments of the present application;
FIG. 6 is a schematic structural diagram of an energy storage sub-module according to other embodiments of the present application;
FIG. 7 is a schematic structural diagram of a high-voltage direct-mount energy storage system according to other embodiments of the present application;
FIG. 8 is a schematic structural diagram of a high-voltage direct-mount energy storage system according to other embodiments of the present application;
FIG. 9 is a schematic structural diagram of a high-voltage direct-mount energy storage system according to other embodiments of the present application;
FIG. 10 is a schematic structural diagram of a high-voltage direct-mount energy storage system according to other embodiments of the present application;
FIG. 11 is a schematic structural diagram of a high-voltage direct-mount energy storage system according to other embodiments of the present application;
FIG. 12 is a schematic structural diagram of a high-voltage direct-mount energy storage system according to other embodiments of the present application;
FIG. 13 is a schematic flowchart of a control method for an energy storage apparatus according to some embodiments of the present application;
FIG. 14 is a schematic flowchart of a control method for an energy storage apparatus according to other embodiments of the present application;
FIG. 15 is a schematic flowchart of a method for determining the number of target engaged energy storage sub-modules on two sides of a first node according to some embodiments of the present application;
FIG. 16 is a schematic flowchart of a method for determining the number of target engaged energy storage sub-modules on a first side of a first node according to some embodiments of the present application;
FIG. 17 is a schematic flowchart of a method for determining the number of target engaged energy storage sub-modules on a second side of a first node according to some embodiments of the present application;
FIG. 18 is a schematic flowchart of a control method for controlling target engaged energy storage sub-modules on two sides of a first node to be in a connected state according to some embodiments of the present application; and
FIG. 19 is a schematic structural diagram of a control apparatus for an energy storage apparatus according to some embodiments of the present application.

## DESCRIPTION OF EMBODIMENTS

The embodiments of the technical solutions of the present application will be described in detail below with reference to the accompanying drawings. The following embodiments are merely used to more clearly illustrate the technical solutions of the present application and are provided as examples only, and should not be construed as limiting the scope of protection of the present application.

Unless otherwise defined, all technical and scientific terms used herein have the same meaning as commonly understood by those skilled in the technical field of the present application; the terms used herein are for the purpose of describing specific embodiments only and are not intended to limit the present application; the terms "include" and any variations thereof in the specification, claims, and descriptions of the drawings of the present application are intended to cover non-exclusive inclusion.

In the description of the embodiments of the present application, technical terms such as "first" and "second" are used only to distinguish different objects and should not be understood as indicating or implying relative importance or implicitly indicating the number, specific order, or hierarchical relationship of the indicated technical features. In the description of the embodiments of the present application, "a plurality of" means two or more (including two), unless otherwise explicitly and specifically defined.

The high-voltage direct-mount energy storage system energy storage valve, the control method for an energy storage apparatus, and the control apparatus for an energy storage apparatus involved in the embodiments of the present application are applicable to energy storage technology application scenarios in power systems, and may also be applicable to other scenarios.

With the development of energy storage technology, direct-current direct-mount energy storage apparatuses have become commonly used components in energy storage technology. Such direct-current direct-mount energy storage apparatuses can independently exchange energy with a direct-current grid or cooperate with other components (for example, converter valves) to exchange energy with an alternating-current grid.

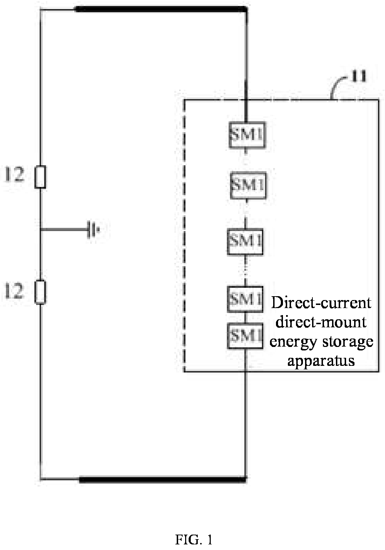

FIG. 1 is a schematic structural diagram of a direct-current direct-mount energy storage apparatus according to the prior art. As shown in FIG. 1, two ends of the direct-current direct-mount energy storage apparatus 11 may be grounded through a clamping resistor 12 (for example, 5 MΩ) to clamp the voltage at the two ends of the direct-current direct-mount energy storage apparatus to a preset voltage (for example, 70 kV); where the direct-current direct-mount energy storage apparatus 11 may include a plurality of energy storage sub-modules (Sub-module, SM) (or simply referred to as SM1).

Typically, a direct-current direct-mount energy storage apparatus includes a plurality of energy storage sub-modules (or referred to as energy storage branches), and battery units (or referred to as battery modules) in each energy storage sub-module generate heat during operation, requiring an energy storage cooling system to dissipate the heat. Due to the high cooling power demand of the battery units in the direct-current direct-mount energy storage apparatus, the energy storage cooling system may include a plurality of cooling subsystems (when the energy storage apparatus is located on a valve tower, the cooling subsystem may be a cooling valve tower, where the valve tower is used to support high-voltage equipment in the energy storage apparatus while providing insulation from the ground). Each cooling subsystem is used to cool the battery units in a plurality of energy storage sub-modules through a cooling water pipeline, and the cooling water pipeline needs to be coupled to the ground potential at a position close to the earth to ensure the safety of the cooling source. The cooling water pipeline of the cooling subsystem has a large diameter, making the equivalent grounding resistance of the cooling water pipeline of the cooling subsystem comparable to the clamping resistor, which may affect the clamping effect of the clamping resistors. For example, when the cooling subsystem is in a normal operating state, the equivalent grounding resistance of the cooling water pipeline is approximately 5 MΩ; when the cooling subsystem is in an alarm state, the equivalent grounding resistance of the cooling water pipeline drops to approximately 3 MΩ.

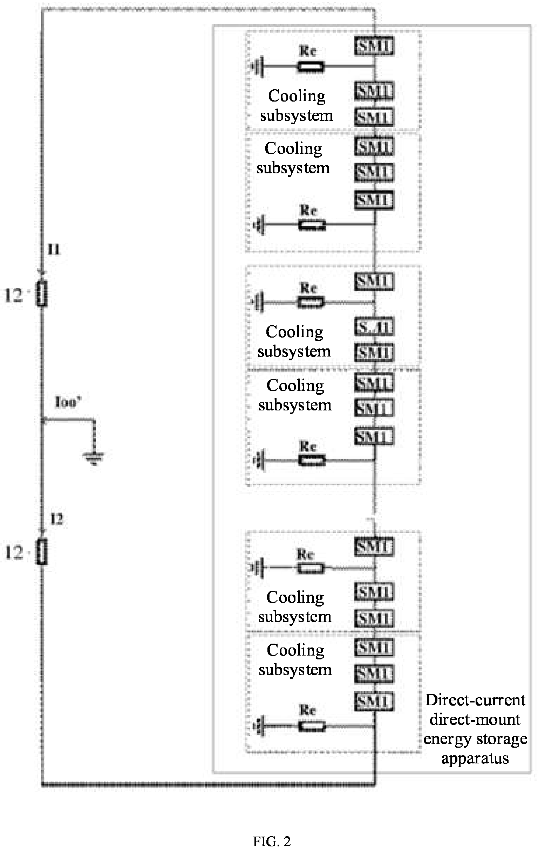

FIG. 2 is a schematic structural diagram of equivalent grounding resistors and clamping resistors of the cooling water pipeline in an energy storage cooling system provided in related technologies. As shown in FIG. 2, since the equivalent grounding resistances Re of the cooling water pipeline of the cooling subsystem are comparable to the clamping resistors 12, leakage currents occur in the branches where the equivalent grounding resistances Re are located. The total leakage current of these leakage currents flows to the reference ground and flows back to the direct-current direct-mount energy storage apparatus through the grounding branch between the two clamping resistors 12 (current Ioo') and the clamping resistors 12 (current I2), that is, in this current flow scenario, I2 equals the sum of I1 and Ioo', and the current Ioo' equals the total leakage current of the leakage currents in the branches where all equivalent grounding resistances are located. In an ideal scenario, I1 is relatively large, the leakage current in the branches where the equivalent grounding resistances are located is small (that is, Ioo' is relatively small), and I2 can be approximately equal to I1. However, during the actual operation of the direct-current direct-mount energy storage apparatus, the leakage current in each branch where the equivalent grounding resistances are located is relatively large, so the current Ioo' is also relatively large, making the magnitude difference between the current I2 and the current I1 significant, resulting in a significant voltage deviation at the two ends of the direct-current direct-mount energy storage apparatus, thereby leading to unstable voltage at the two ends of the direct-current direct-mount energy storage apparatus, which may affect the operational reliability of components within the energy storage apparatus.

For example, when the battery unit in the energy storage sub-module has a high SOC (for example, 100%), the equivalent grounding resistances of the cooling water pipeline of the cooling subsystem have the greatest influence on the clamping resistors. In this case, the voltage at the first end of the direct-current direct-mount energy storage apparatus can reach up to 45.3 kV, while the voltage at the second end can reach 24.7 kV, or the voltage at the second end of the direct-current direct-mount energy storage apparatus can reach up to 43.9 kV, while the voltage at the first end can reach 26.1 kV.

To address the issue in related technologies where the voltage at the two ends of the direct-current direct-mount energy storage apparatus is unstable, affecting the operational reliability of components within the energy storage apparatus, embodiments of the present application propose a method of providing a first grounding circuit in the energy storage apparatus, so that the leakage current (that is, the total leakage current of the dielectric branches) may flow back to the energy storage apparatus through the first grounding circuit, rather than flowing back to the energy storage apparatus through the clamping circuit (that is, reducing the current Ioo' as shown in FIG. 2), thereby preventing significant voltage deviation at the two ends of the energy storage apparatus and reducing the impact of the equivalent grounding resistance of the cooling water pipeline on the clamping effect of the clamping resistors. Further, by ensuring that a difference between the total voltage magnitudes of the target engaged energy storage sub-modules on the two sides of the first node is less than a preset threshold, and a difference between the total voltage and the expected voltage of the energy storage apparatus is less than a preset difference, the voltage at the two ends of the energy storage apparatus can be substantially stably controlled at the corresponding expected voltage, thereby facilitating improvement of the stability of the voltage at the two ends of the energy storage apparatus.

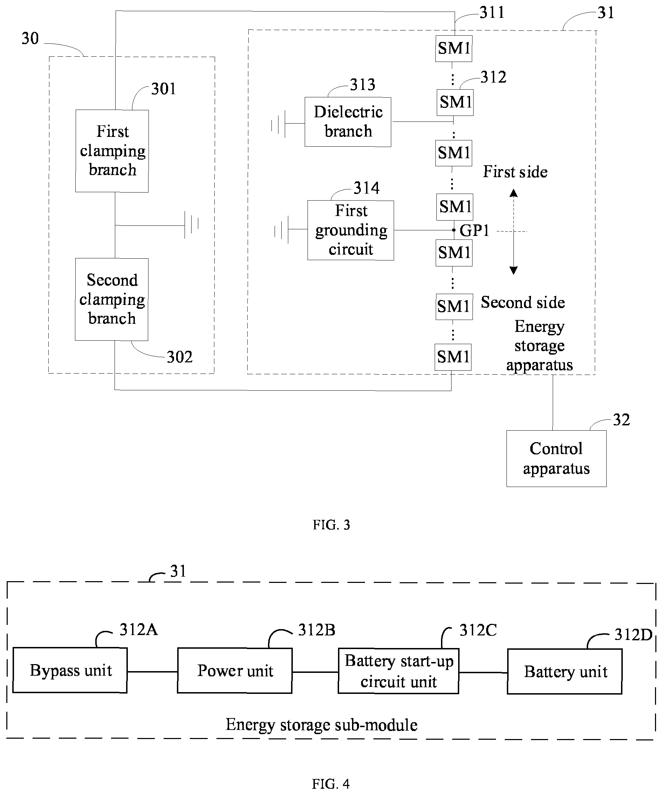

In some embodiments, FIG. 3 is a schematic structural diagram of a high-voltage direct-mount energy storage system according to some embodiments of the present application. As shown in FIG. 3, the high-voltage direct-mount energy storage system of the embodiments of the present application may include, but is not limited to: a clamping circuit 30, an energy storage apparatus 31, and a control apparatus 32. A first end of the clamping circuit 30 may be connected to a first end of the energy storage apparatus 31, and a second end of the clamping circuit 30 may be connected to a second end of the energy storage apparatus 31. The control apparatus 32 may be connected to the energy storage apparatus 30 to control the state of each energy storage sub-module in the energy storage apparatus 31.

The clamping circuit 30 in the embodiments of the present application may be used to clamp the voltage at the two ends of the energy storage apparatus 31 to an expected voltage. The clamping circuit 30 may include, but is not limited to, a first clamping branch 301 and a second clamping branch 302. The resistance value (or referred to as clamping resistance value) of the first clamping branch 301 and the resistance value (or referred to as clamping resistance value) of the second clamping branch 302 are typically the same.

By way of example, a first end of the first clamping branch 301 may be connected to the first end of the energy storage apparatus 32, a second end of the first clamping branch 301 may be connected to a first end of the second clamping branch 302, and a second end of the second clamping branch 302 may be connected to the second end of the energy storage apparatus 32, where the connection point of the first clamping branch 301 and the second clamping branch 302 may be coupled to a reference ground.

As a further example, the first end of the first clamping branch 301 may be connected to the first end of the energy storage apparatus 32, and the second end of the first clamping branch 301 may be coupled to the reference ground; the first end of the second clamping branch 302 may be coupled to the reference ground, and the second end of the second clamping branch 302 may be connected to the second end of the energy storage apparatus 32.

The energy storage apparatus 31 in the embodiments of the present application may include a first energy storage main line 311 and at least two energy storage sub-modules 312 connected to the first energy storage main line 311.

By way of example, the energy storage apparatus 31 in the embodiments of the present application may include, but is not limited to, an energy storage valve. It should be understood that when the energy storage apparatus is an energy storage valve, the first energy storage main line 311 in the embodiments of the present application may be referred to as a first energy storage valve main line, and the energy storage sub-module 312 in the embodiments of the present application may include, but is not limited to, the SM1.

The switching state of the energy storage sub-module 312 involved in the embodiments of the present application may include, but is not limited to, a connected state (or referred to as an engaged state) or a disconnected state. When the energy storage sub-module 312 is in the connected state, the energy storage sub-module 312 is in a state of being serially connected to the first energy storage main line 311; and when the energy storage sub-module 312 is in the disconnected state, the energy storage sub-module 312 is in a bypassed state.

Both ends of the first energy storage main line 311 in the embodiments of the present application may be respectively connected to the clamping circuit 30. By way of example, the energy storage apparatus 31 in the embodiments of the present application may be disposed between a positive direct-current bus and a negative direct-current bus in the high-voltage direct-mount energy storage system. Certainly, the energy storage apparatus 31 may alternatively be disposed at other positions.

When the energy storage apparatus 31 is disposed between the positive direct-current bus and the negative direct-current bus, both ends of the first energy storage main line 311 in the embodiments of the present application may be respectively connected to the positive direct-current bus and the negative direct-current bus, and two ends of the clamping circuit 30 may be respectively connected to the positive direct-current bus and the negative direct-current bus, so that the voltage of the positive and negative direct-current buses can be clamped to a preset voltage through the clamping circuit 30.

The energy storage apparatus 31 in the embodiments of the present application may further include at least one dielectric branch 313, with one end of the dielectric branch 313 connected to at least one energy storage sub-module 312, and the other end of the dielectric branch 313 coupled to a reference ground; where each dielectric branch 313 has a corresponding equivalent grounding resistance, and the equivalent grounding resistance is close or equal in magnitude to the resistance value of any clamping branch in the clamping circuit 30. It should be noted that, for ease of illustration, FIG. 3 shows the energy storage apparatus 31 including one dielectric branch 313 as an example. Certainly, the energy storage apparatus 31 may alternatively include a plurality of dielectric branches 313.

By way of example, the dielectric branch 313 may include, but is not limited to, at least one of a cooling branch, a fire-fighting branch, and a heat-transfer medium branch. The cooling branch may include, but is not limited to, a cooling water pipeline, the fire-fighting branch may include, but is not limited to, a fire-fighting medium pipeline, and the heat-transfer medium branch may include, but is not limited to, a heat-transfer medium pipeline for heating target components in the energy storage apparatus. For example, when the dielectric branch 313 includes a cooling branch, there is an equivalent grounding resistance corresponding to the cooling water pipeline. As another example, when the dielectric branch 313 includes a fire-fighting branch, there is an equivalent grounding resistance corresponding to the fire-fighting medium pipeline. As yet another example, when the dielectric branch 313 includes a heat-transfer medium branch, there is an equivalent grounding resistance corresponding to the heat-transfer medium pipeline.

By way of example, each energy storage sub-module 312 may be equipped with a separate dielectric branch 313, with of the dielectric branch coupled to the reference ground at a position close to the earth.

As a further example, a plurality of energy storage sub-modules 312 may share one dielectric branch 313, with the dielectric branch coupled to the reference ground at a position close to the earth. The plurality of energy storage sub-modules 312 may be stacked in the energy storage apparatus 31, and in one example, the stacked arrangement forms a plurality of energy storage valve towers.

It should be noted that each dielectric branch 313 in the embodiments of the present application generates a leakage current, and the generated leakage current flows to the reference ground through the dielectric branch 313.

The energy storage apparatus 31 in the embodiments of the present application may further include a first node GP1 disposed on the first energy storage main line 311 and a first grounding circuit 314 connected to the first node GP1. One end of the first grounding circuit 314 may be connected to the first node GP1, and the other end of the first grounding circuit 314 may be coupled to the reference ground, with a resistance value of the first grounding circuit 314 being less than a preset resistance threshold, so that the leakage current generated by the dielectric branches 313 (that is, the total leakage current of the dielectric branches 313) may flow back to the first energy storage main line 311 in the energy storage apparatus 31 through the first grounding circuit 314 and the first node GP1, rather than flowing back to the first energy storage main line 311 in the energy storage apparatus 31 through the clamping circuit 30 (that is, reducing the current Ioo' as shown in FIG. 2). As a result, the voltage at the two ends of the energy storage apparatus will not experience significant deviation, which reduces the impact of the equivalent grounding resistance of the cooling water pipeline on the clamping effect of the clamping resistors, thereby facilitating improvement of the stability of the voltage at the two ends of the energy storage apparatus.

By way of example, the resistance value of the first grounding circuit in the embodiments of the present application needs to be small compared to the clamping resistor in the clamping circuit 30, so that the leakage current of the medium piping circuit may flow back to the first energy storage main line through the first grounding circuit, reducing the leakage current of the clamping branch (that is, reducing the current Ioo' as shown in FIG. 2), where the resistance value of the first grounding circuit may be set according to actual conditions.

By way of example, the preset resistance threshold in the embodiments of the present application may be a product of the resistance value of the first clamping branch (or the second clamping branch) and 0.02. For example, when the resistance value of the first clamping branch is 5 MΩ, the preset resistance threshold may be 100 kΩ.

Further, the preset resistance threshold may be a product of the resistance value of the first clamping branch and 0.001. For example, when the resistance value of the first clamping branch is 5 MΩ, the preset resistance threshold may be 5 kΩ.

The control apparatus 32 in the embodiments of the present application may be configured to control target engaged energy storage sub-modules on the two sides of the first node GP1 to be in a connected state based on the expected voltage of the energy storage apparatus 31 and the measured voltages of at least two energy storage sub-modules 312 connected to the first energy storage main line 311, where a difference between the total voltage magnitudes of the target engaged energy storage sub-modules on the two sides of the first node GP1 is less than a preset threshold, and a difference between the total voltage and the expected voltage of the energy storage apparatus 31 is less than a preset difference.

It should be understood that the total voltage of the energy storage apparatus 31 involved in the embodiments of the present application is related to the voltage at the two ends of the energy storage apparatus 31, for example, the total voltage of the energy storage apparatus 31 may be the voltage difference between the two ends of the energy storage apparatus 31. In addition, when the energy storage apparatus 31 is disposed between the positive direct-current bus and the negative direct-current bus, the expected voltage of the energy storage apparatus 31 is substantially the same as the expected voltage (or referred to as the expected reference voltage) between the positive and negative direct-current buses, and the total voltage of the energy storage apparatus 31 is substantially the same as the voltage between the positive and negative direct-current buses.

By way of example, the control apparatus 32 in the embodiments of the present application may control the target engaged energy storage sub-modules on the first side of the first node GP1 to be in a connected state and the target engaged energy storage sub-modules on the second side of the first node GP1 to be in a connected state based on the expected voltage of the energy storage apparatus 31 and the measured voltages of at least two energy storage sub-modules 312 connected to the first energy storage main line 311.

By way of example, in the embodiments of the present application, the difference between the total voltage magnitude of the target engaged energy storage sub-modules on the first side of the first node GP1 and the total voltage magnitude of the target engaged energy storage sub-modules on the second side of the first node GP1 is less than a preset threshold (within the electrical range that the equipment can withstand, such as less than a voltage magnitude of four energy storage sub-modules, preferably less than a voltage magnitude of one energy storage sub-module), and a difference between the total voltage and the expected voltage of the energy storage apparatus 31 is less than a preset difference (a very small value, such as less than 10% of the expected voltage, preferably less than 5% of the expected voltage, and more preferably less than 1% of the expected voltage), so that the voltage at the two ends of the energy storage apparatus 31 can be substantially stably controlled at the corresponding expected voltage. It can be seen that the embodiments of the present application can improve the stability of the voltage at the two ends of the energy storage apparatus 31, thereby facilitating improvement of operational reliability of components within the energy storage apparatus 31.

In one possible implementation, the deviation percentage of the measured voltages of each energy storage sub-module 312 is less than 10%, and the numbers of the target engaged energy storage sub-modules on the two sides of the first node may be equal or differ by 1.

The deviation percentage of the measured voltage of any energy storage sub-module 312 involved in the embodiments of the present application may refer to the deviation percentage between the measured voltage of the energy storage sub-module 312 and a preset reference voltage; where the preset reference voltage may include, but is not limited to, any one of the following: a maximum measured voltage of a plurality of energy storage sub-modules, a minimum measured voltage of a plurality of energy storage sub-modules, an average measured voltage of a plurality of energy storage sub-modules, or a preset rated voltage.

In this implementation, when the deviation percentage of the measured voltages of each energy storage sub-module 312 is less than 10%, that is, when the difference between the measured voltages of different energy storage sub-modules 312 is not significant, the number of the target engaged energy storage sub-modules on the first side of the first node may be equal to or differ by 1 from the number of the target engaged energy storage sub-modules on the second side of the first node. This ensure that, in cases of fluctuations in the switching state and/or switching position of the energy storage sub-modules within the energy storage apparatus, a difference between the total voltage magnitudes of the target engaged energy storage sub-modules on the two sides of the first node is less than a preset threshold, and a difference between the total voltage and the expected voltage of the energy storage apparatus is less than a preset difference. As a result, the voltage at the two ends of the energy storage apparatus can be substantially stably controlled at the corresponding expected voltage without being affected by changes in the equivalent grounding resistance of the cooling water pipeline, changes in the switching state of the energy storage sub-modules, and/or changes in the switching position. This not only facilitates further improvement of the stability of the voltage at the two ends of the energy storage apparatus but also reduces the requirement for direct-current voltage insulation level to ground for high-voltage equipment in the energy storage apparatus, thereby saving costs for the energy storage apparatus.

In another possible implementation, the deviation percentage of the measured voltages of each energy storage sub-module 312 is not less than 10%, and the difference between the number of target engaged energy storage sub-modules on the two sides of the first node may be greater than 1 and less than a preset number threshold. The preset number threshold may include, but is not limited to, 3 or 4.

In this implementation, when the deviation percentage of the measured voltages of each energy storage sub-module 312 is not less than 10%, that is, when the difference between the measured voltages of different energy storage sub-modules 312 is not small, the difference between the number of target engaged energy storage sub-modules on the first side of the first node and the number of target engaged energy storage sub-modules on the second side of the first node may be greater than 1 and less than a preset number threshold. This ensures that, in cases of fluctuations in the switching state and/or switching position of the energy storage sub-modules within the energy storage apparatus, the difference between the total voltage magnitudes of the target engaged energy storage sub-modules on the two sides of the first node is less than the preset threshold, and the difference between the total voltage and the expected voltage of the energy storage apparatus is less than the preset difference. As a result, the voltage at the two ends of the energy storage apparatus can be substantially stably controlled at the corresponding expected voltage without being affected by changes in the equivalent grounding resistance of the cooling water pipeline, changes in the switching state of the energy storage sub-modules, and/or changes in the switching position. This not only facilitates further improvement of the stability of the voltage at the two ends of the energy storage apparatus but also reduces the requirement for direct-current voltage insulation level to ground for high-voltage equipment in the energy storage apparatus, thereby saving costs for the energy storage apparatus.

For example, assuming that the measured voltages of the energy storage sub-modules on the first side of the first node are relatively high, but the measured voltages of the energy storage sub-modules on the second side of the first node are relatively low, the control apparatus may determine that the number of target engaged energy storage sub-modules on the first side of the first node may be smaller, and the number of target engaged energy storage sub-modules on the second side of the first node may be larger, but the difference in the number between the two sides may be less than a preset number threshold.

In summary, the high-voltage direct-mount energy storage system in the embodiments of the present application may include a clamping circuit, an energy storage apparatus, and a control apparatus. The energy storage apparatus includes a first energy storage main line with two ends respectively connected to the clamping circuit, at least two energy storage sub-modules connected to the first energy storage main line, at least one dielectric branch, a first node disposed on the first energy storage main line, and a first grounding circuit connected to the first node, with a resistance value of the first grounding circuit being less than a preset resistance threshold, so that the leakage current generated by the dielectric branches may flow back to the first energy storage main line in the energy storage apparatus through the first grounding circuit and the first node, rather than flowing back to the first energy storage main line in the energy storage apparatus through the clamping circuit (that is, reducing the current Ioo' as shown in FIG. 2). As a result, the voltage at the two ends of the energy storage apparatus will not experience significant deviation, which reduces the impact of the equivalent grounding resistance of the cooling water pipeline on the clamping effect of the clamping resistors, thereby facilitating improvement of the stability of the voltage at the two ends of the energy storage apparatus. In addition, the control apparatus controls the target engaged energy storage sub-modules on the two sides of the first node to be in a connected state based on the expected voltage of the energy storage apparatus and the measured voltages of at least two energy storage sub-modules connected to the first energy storage main line, where a difference between the total voltage magnitudes of the target engaged energy storage sub-modules on the two sides of the first node is less than a preset threshold, and a difference between the total voltage and the expected voltage of the energy storage apparatus is less than a preset difference. As a result, the voltage at the two ends of the energy storage apparatus can be substantially stably controlled at the corresponding expected voltage. It can be seen that the embodiments of the present application can improve the stability of the voltage at the two ends of the energy storage apparatus, thereby facilitating improvement of operational reliability of components within the energy storage apparatus.

In some embodiments, the embodiments of the present application provide an exemplary description of the related content regarding the position setting of the first node in the first energy storage main line.

In one possible implementation, the total voltage magnitude of the energy storage sub-modules 312 on each side of the first node GP1 is greater than or equal to one-half of the expected voltage of the energy storage apparatus.

In this implementation, the total voltage magnitude of the energy storage sub-modules on the first side of the first node is greater than or equal to one-half of the expected voltage of the energy storage apparatus, and the total voltage magnitude of the energy storage sub-modules on the second side of the first node is greater than or equal to one-half of the expected voltage of the energy storage apparatus, so that the total voltage magnitude of the target engaged energy storage sub-modules on the two sides of the first node can respectively reach one-half of the expected voltage of the energy storage apparatus, thereby making the total voltage of the energy storage apparatus substantially equal to the expected voltage.

In another possible implementation, the total voltage magnitude of the energy storage sub-modules on any side of the first node is less than one-half of the expected voltage of the energy storage apparatus, and the difference between one-half of the expected voltage of the energy storage apparatus and the total voltage magnitude of the energy storage sub-modules on any side of the first node may be less than a preset voltage difference, so that the total voltage magnitude of the target engaged energy storage sub-modules on the two sides of the first node can substantially reach one-half of the expected voltage of the energy storage apparatus, thereby making a difference between the total voltage and the expected voltage of the energy storage apparatus less than a preset difference. By way of example, the preset voltage difference may be one-half of the preset difference.

By way of example, in the embodiments of the present application, the number of energy storage sub-modules on the first side of the first node GP2 may be equal to the number of energy storage sub-modules on the second side of the first node GP1, or the difference between the number of energy storage sub-modules on the first side of the first node GP2 and the number of energy storage sub-modules on the second side of the first node GP1 may be less than a preset number threshold.

For ease of understanding, the following embodiments of the present application provide an exemplary description of the related content of the energy storage sub-module 312.

FIG. 4 is a schematic structural diagram of an energy storage sub-module according to some embodiments of the present application. As shown in FIG. 4, the energy storage sub-module 312 in the embodiments of the present application may include, but is not limited to: a bypass unit 312A, a power unit 312B, a battery start-up circuit unit 312C, and a battery unit 312D. The bypass unit 312A may be configured to switch the bypass state of the energy storage sub-module 31. The power unit 312B may be configured to switch the switching state of the energy storage sub-module. The battery start-up circuit unit 312C may be configured to limit the charge-discharge current during the start-up phase of charging or discharging the battery unit 312D. The battery unit 312D may be configured to store or release electrical energy based on the switching state of the energy storage sub-module and the magnitude of the voltage at the two ends of the energy storage apparatus.

By way of example, the power unit 312B may include, but is not limited to, a bridge circuit unit, a balancing capacitor, and/or a balancing resistor, where the bridge circuit unit may include, but is not limited to, a half-bridge circuit unit or a full-bridge circuit unit.

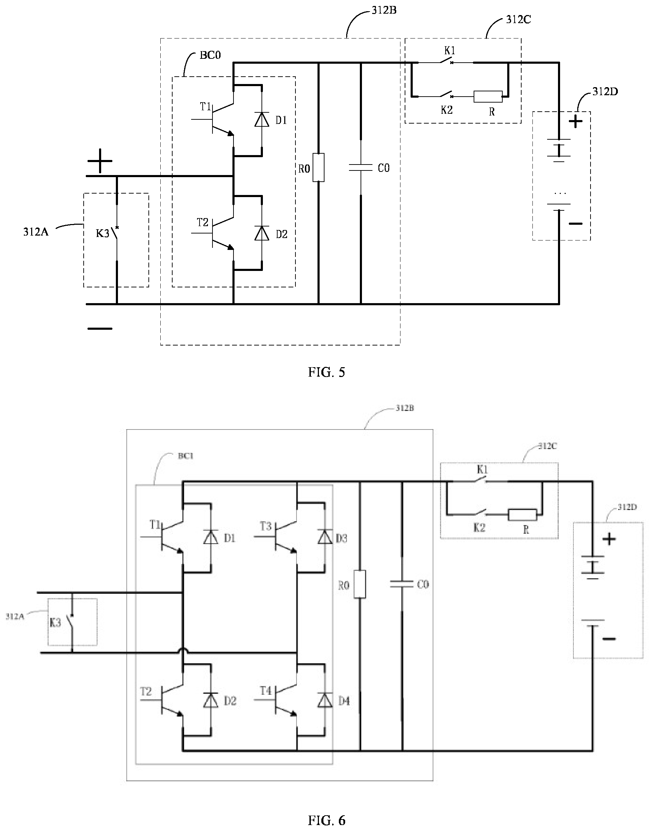

FIG. 5 is a schematic structural diagram of an energy storage sub-module according to other embodiments of the present application. As shown in FIG. 5, the energy storage sub-module 31 may include, but is not limited to: a bypass unit 312A, a power unit 312B, a battery start-up circuit unit 312C, and a battery unit 312D. The bypass unit 312A may include, but is not limited to, a bypass switch K3. The power unit 312B may include, but is not limited to, a half-bridge circuit unit BC0, a balancing capacitor C0, and/or a balancing resistor R0; where the half-bridge circuit unit BC0 may include, but is not limited to, switching tubes T1 and T2, and diodes D1 and D2 respectively connected in parallel with each switching tube. The battery start-up circuit unit 312C may include, but is not limited to, a pre-charge unit and a direct-charge unit connected in parallel; where the pre-charge unit may include a switch K2 and a resistor R1 connected in series; and the direct-charge unit may include a switch K1.

FIG. 6 is a schematic structural diagram of an energy storage sub-module according to other embodiments of the present application. As shown in FIG. 6, the energy storage sub-module 31 may include, but is not limited to: a bypass unit 312A, a power unit 312B, a battery start-up circuit unit 312C, and a battery unit 312D. The bypass unit 312A may include, but is not limited to, a bypass switch K3. The power unit 312B may include, but is not limited to, a full-bridge circuit unit BC1, a balancing capacitor C0, and/or a balancing resistor R0; where the full-bridge circuit unit BC1 may include, but is not limited to, switching tubes T1 to T4, and diodes D1 to D4 respectively connected in parallel with each switching tube. The battery start-up circuit unit 312C may include, but is not limited to, a pre-charge unit and a direct-charge unit connected in parallel; where the pre-charge unit may include a switch K2 and a resistor R1 connected in series; and the direct-charge unit may include a switch K1.

Certainly, the energy storage sub-module 312 may alternatively adopt other structural forms. It should be noted that the structure of the energy storage sub-module 312 is not limited in the embodiments of the present application, and any energy storage sub-module with a switchable switching state is applicable to the energy storage apparatus of the embodiments of the present application.

In some embodiments, based on the above embodiments, the embodiments of the present application provide an exemplary description of the related content of the first grounding circuit 314.

In one possible implementation, the first grounding circuit 314 may include a grounding resistor or a grounding reactor and limit the current flowing through the first grounding circuit 314, so that while improving the voltage stability at the two ends of the energy storage apparatus, it also facilitates the protection of the energy storage apparatus. It should be noted that the resistance value of the grounding resistor or grounding reactor may be less than a preset resistance threshold.

It should be noted that, for ease of illustration, in the following embodiments of the present application, by way of example, the energy storage apparatus 31 is disposed between a positive direct-current bus and a negative direct-current bus, and the bridge circuit unit in the power unit 312B is a half-bridge circuit unit.

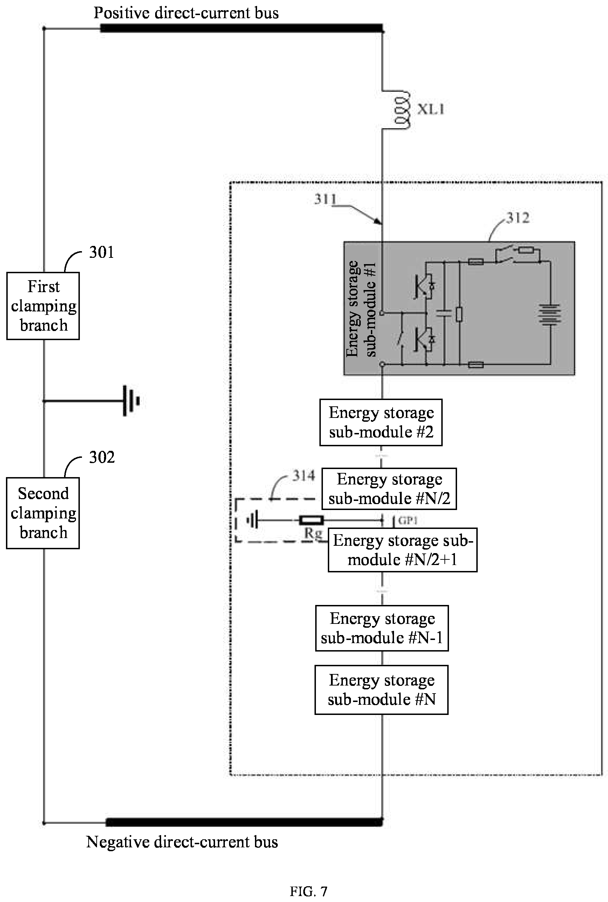

FIG. 7 is a schematic structural diagram of a high-voltage direct-mount energy storage system according to other embodiments of the present application. As shown in FIG. 7, the energy storage apparatus of the embodiments of the present application may include: a first grounding circuit 314 and N energy storage sub-modules 312 connected to the first energy storage main line 311. By way of example, one end of the first energy storage main line 311 may be connected to the positive direct-current bus through a current-limiting reactor XL1, and the other end of the first energy storage main line 311 may be connected to the negative direct-current bus.

By way of example, two ends of the clamping circuit 30 may be respectively connected to the positive direct-current bus and the negative direct-current bus, the clamping circuit 30 may include a first clamping branch 301 and a second clamping branch 302, and the connection point of the first clamping branch 301 and the second clamping branch 302 may be coupled to a reference ground; where the first clamping branch 301 and the second clamping branch 302 may respectively include corresponding clamping resistors.

One end of the first grounding circuit 314 may be connected to the first node GP1 in the first energy storage main line 311, the other end of the first grounding circuit 314 may be coupled to the reference ground; and the first grounding circuit 314 may include a grounding resistor Rg.

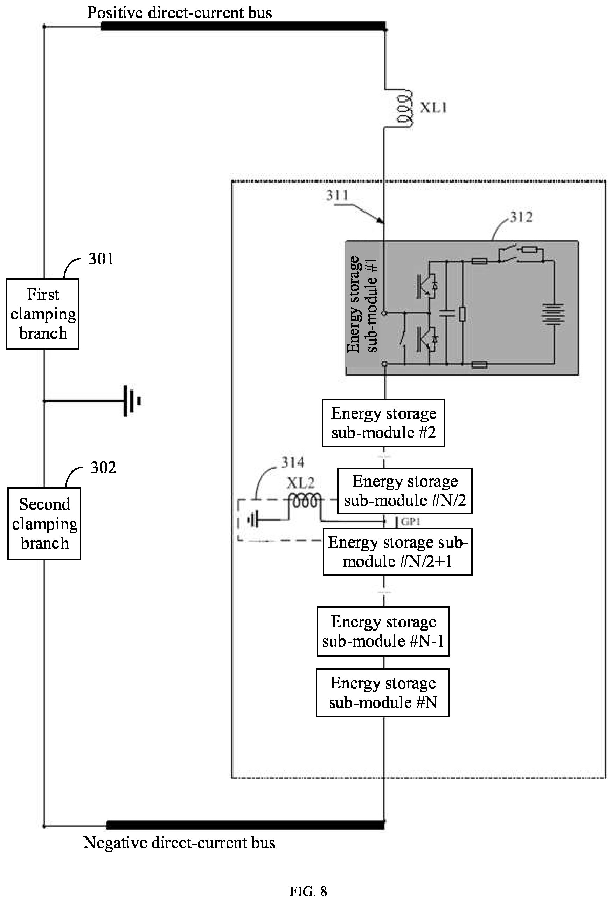

FIG. 8 is a schematic structural diagram of a high-voltage direct-mount energy storage system according to other embodiments of the present application. As shown in FIG. 8, as compared to the high-voltage direct-mount energy storage system shown in FIG. 7, the first grounding circuit 314 in FIG. 8 may include a grounding reactor XL2.

It should be understood that in FIG. 7 and FIG. 8, the first node GP1 is illustrated as being located at the center position of the first energy storage main line 311, that is, the number N/2 of energy storage sub-modules on the first side of the first node GP1 in the first energy storage main line 311 is equal to the number N/2 of energy storage sub-modules on the second side of the first node GP1 in the first energy storage main line 311, where N represents a total number of all energy storage sub-modules connected to the first energy storage main line 311 of the energy storage apparatus.

In another possible implementation, the first grounding circuit 314 may be a wire (or referred to as a resistance-free grounding circuit).

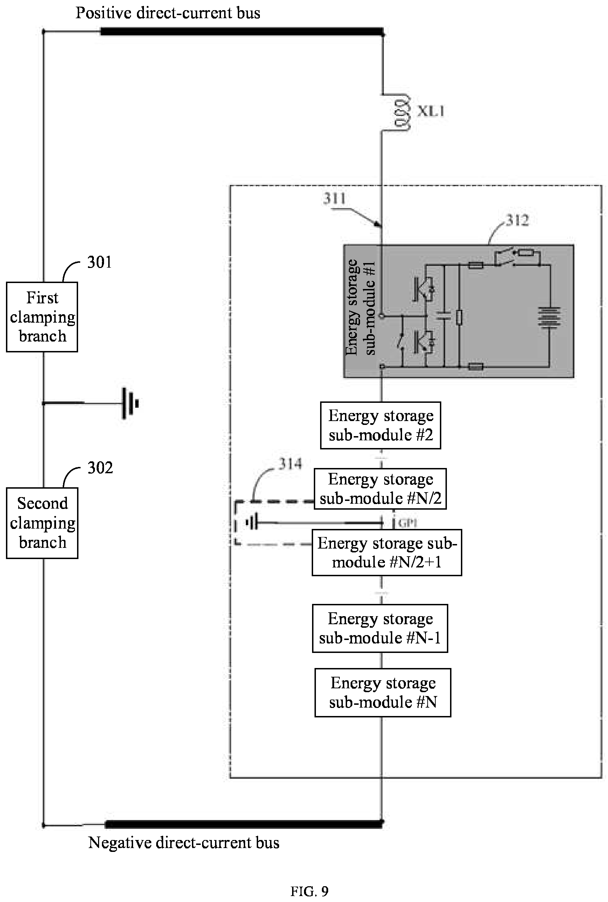

FIG. 9 is a schematic structural diagram of a high-voltage direct-mount energy storage system according to other embodiments of the present application. As shown in FIG. 9, as compared to the high-voltage direct-mount energy storage system shown in FIG. 7, the first grounding circuit 314 in FIG. 9 is a wire, that is, the first node GP1 is coupled to the reference ground through a wire.

Certainly, the first grounding circuit 314 in the embodiments of the present application may alternatively adopt other circuit forms.

In some embodiments, the first grounding circuit 314 in the embodiments of the present application may further include a current detection unit, configured to detect a current parameter on the first grounding circuit 314 between the first node and the reference ground, so as to timely monitor whether a ground short circuit occurs inside the energy storage apparatus, and to perform short-circuit protection promptly when a ground short circuit is detected inside the energy storage apparatus, thereby further facilitating the protection of the energy storage apparatus.

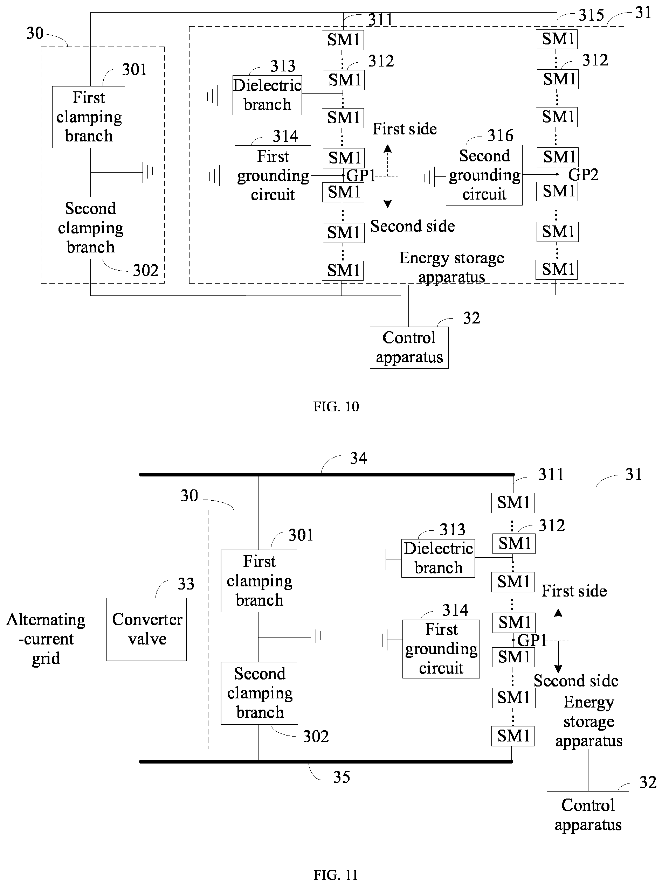

In some embodiments, FIG. 10 is a schematic structural diagram of a high-voltage direct-mount energy storage system according to other embodiments of the present application. Considering that the energy storage capacity of the energy storage apparatus in the high-voltage direct-mount energy storage system is increasing, as shown in FIG. 10, the energy storage apparatus 31 in the embodiments of the present application may further include at least one second energy storage main line 315 and at least two energy storage sub-modules 312 connected to the second energy storage main line 315, where the second energy storage main line 315 may be connected in parallel with the first energy storage main line 311.

When the energy storage apparatus 31 is disposed between the positive direct-current bus and the negative direct-current bus, two ends of the second energy storage main line 315 in the embodiments of the present application may be respectively connected to the positive direct-current bus and the negative direct-current bus.

In some embodiments, the energy storage apparatus in the embodiments of the present application may further include at least one dielectric branch 313 connected to the energy storage sub-module 312; where one end of the dielectric branch 313 may be connected to at least one of the energy storage sub-modules 312, and the other end of the dielectric branch 313 may be coupled to a reference ground, so that the leakage current generated by the dielectric branch 313 flow to the reference ground through the dielectric branch 313.

In some embodiments, the leakage current generated by the dielectric branches 313 connected to the energy storage sub-modules 312 on the second energy storage main line 315 may flow back to the second energy storage main line 315 in the energy storage apparatus 31 through the first grounding circuit 314 and the first node GP1, rather than flowing back to the second energy storage main line 315 in the energy storage apparatus 31 through the clamping circuit 30 (that is, reducing the current Ioo' as shown in FIG. 2). As a result, the voltage at the two ends of the energy storage apparatus will not experience significant deviation, which reduces the impact of the equivalent grounding resistance of the cooling water pipeline on the clamping effect of the clamping resistors, thereby facilitating improvement of the stability of the voltage at the two ends of the energy storage apparatus.

In some embodiments, the energy storage apparatus 31 in the embodiments of the present application may further include a second node GP2 disposed on the second energy storage main line 315 and a second grounding circuit 316 connected to the second node GP2. One end of the second grounding circuit 316 may be connected to the second node GP2, and the other end of the second grounding circuit 316 may be coupled to a reference ground, where a resistance value of the second grounding circuit 316 may be less than a preset resistance threshold, so that the leakage current generated by the dielectric branches 313 may flow back to the second energy storage main line 315 in the energy storage apparatus 31 through the second grounding circuit 316 and the second node GP2, rather than flowing back to the second energy storage main line 315 in the energy storage apparatus 31 through the clamping circuit 30 (that is, reducing the current Too' as shown in FIG. 2). As a result, the voltage at the two ends of the energy storage apparatus will not experience significant deviation, which reduces the impact of the equivalent grounding resistance of the cooling water pipeline on the clamping effect of the clamping resistors, thereby facilitating improvement of the stability of the voltage at the two ends of the energy storage apparatus. In addition, the second grounding circuit 316 is disposed in such a way that the leakage current generated by the dielectric branches 313 connected to the energy storage sub-modules 312 on the second energy storage main line 315 may flow back to the second energy storage main line 315 in the energy storage apparatus 31 through a shorter path, which helps reduce the energy consumption of the energy storage apparatus 31.

In some embodiments, the total voltage magnitude of the energy storage sub-modules 312 on each side of the second node GP2 is greater than or equal to one-half of the expected voltage of the energy storage apparatus.

In this implementation, the total voltage magnitude of the energy storage sub-modules on the first side of the second node GP2 is greater than or equal to one-half of the expected voltage of the energy storage apparatus, and the total voltage magnitude of the energy storage sub-modules on the second side of the second node GP2 is greater than or equal to one-half of the expected voltage of the energy storage apparatus, so that the total voltage magnitude of the target engaged energy storage sub-modules on two sides of the second node GP2 can respectively reach one-half of the expected voltage of the energy storage apparatus, thereby making the total voltage of the energy storage apparatus substantially equal to the expected voltage.

In another possible implementation, the total voltage magnitude of the energy storage sub-modules on any side of the second node GP2 is less than one-half of the expected voltage of the energy storage apparatus, and the difference between one-half of the expected voltage of the energy storage apparatus and the total voltage magnitude of the energy storage sub-modules on any side of the second node GP2 is less than a preset voltage difference, so that the total voltage magnitude of the target engaged energy storage sub-modules on two sides of the second node can substantially reach one-half of the expected voltage of the energy storage apparatus, thereby making a difference between the total voltage and the expected voltage of the energy storage apparatus less than a preset difference. By way of example, the preset voltage difference may be one-half of the preset difference.

By way of example, in the embodiments of the present application, the number of energy storage sub-modules on the first side of the second node GP2 may be equal to the number of energy storage sub-modules on the second side of the second node GP2, or the difference between the number of energy storage sub-modules on the first side of the second node GP2 and the number of energy storage sub-modules on the second side of the second node GP2 may be less than a preset number threshold.

In some embodiments, FIG. 11 is a schematic structural diagram of a high-voltage direct-mount energy storage system according to other embodiments of the present application. Based on the above embodiments, considering that the energy storage apparatus can cooperate with a converter valve to exchange energy with an alternating-current grid, as shown in FIG. 11, the high-voltage direct-mount energy storage system of the embodiments of the present application may further include a converter valve 33, a positive direct-current bus 34, and a negative direct-current bus 35. A first end of the converter valve 33 may be connected to the positive direct-current bus 34, a second end of the converter valve 33 may be connected to the negative direct-current bus 35, a third end of the converter valve 33 may be connected to an alternating-current grid, and both ends of the first energy storage main line 311 in the energy storage apparatus 31 may be respectively connected to the positive direct-current bus 34 and the negative direct-current bus 35, that is, the energy storage apparatus 31 may be connected to the alternating-current grid through the converter valve 33, so that the energy storage apparatus 31 can cooperate with the converter valve 33 to achieve storage and release of electrical energy. The converter valve 33 can exchange energy with the alternating-current grid and can be configured to control input power and output power.

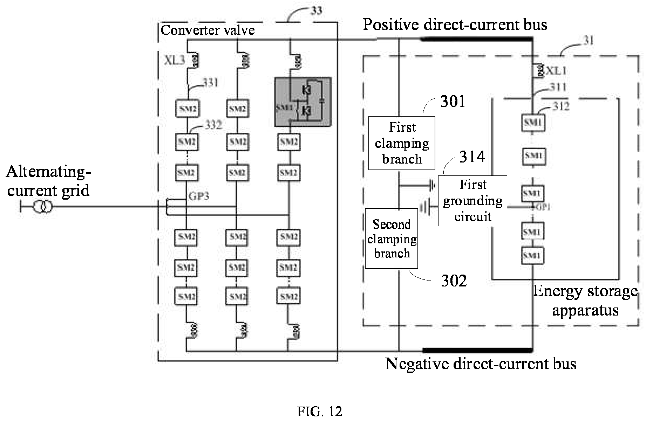

In some embodiments, FIG. 12 is a schematic structural diagram of a high-voltage direct-mount energy storage system according to other embodiments of the present application. Based on the above embodiments, the embodiments of the present application provide an exemplary description of the related content of the converter valve 33. As shown in FIG. 12, the converter valve 33 may include a plurality of converter main lines 331 and at least two converter sub-modules 332 (or simply referred to as SM2) connected to the converter main line 331. Both ends of each converter main line 331 may be connected to the positive and negative direct-current buses through corresponding current-limiting reactors XL3, and a third node GP3 of each converter main line 331 may be connected to the alternating-current grid.

Certainly, the converter valve 33 in the embodiments of the present application may alternatively adopt other circuit forms, provided that it can achieve energy exchange with the alternating-current grid and perform the functions of controlling the input power and output power.

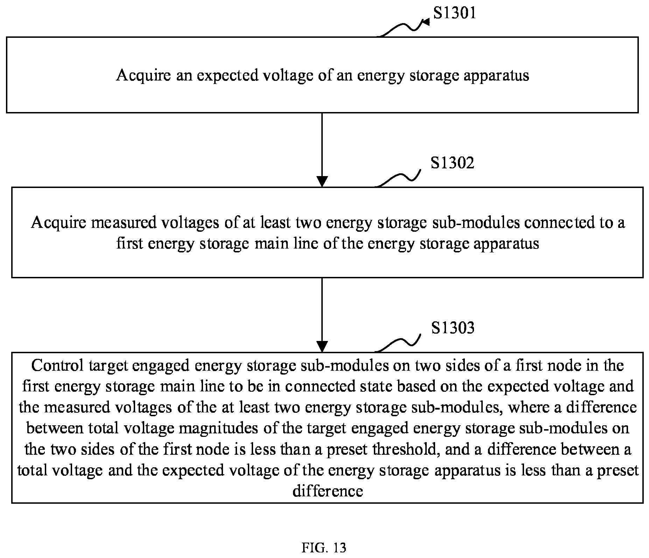

In some embodiments, FIG. 13 is a schematic flowchart of a control method for an energy storage apparatus according to some embodiments of the present application. The energy storage apparatus in the embodiments of the present application may be the energy storage apparatus in any of the above high-voltage direct-mount energy storage system embodiments. Based on the above embodiments, the embodiments of the present application take the method applied to the control apparatus of the energy storage apparatus as an example to provide an exemplary description of the related content of the control method for the energy storage apparatus. As shown in FIG. 13, the method of the embodiments of the present application may include the following steps.

Step S1301: Acquire an expected voltage of the energy storage apparatus.

In one possible implementation, the control apparatus may receive the expected voltage of the energy storage apparatus sent by another device.

In another possible implementation, the control apparatus may receive the expected voltage of the energy storage apparatus input by a user.

In another possible implementation, the control apparatus may acquire the expected voltage of the energy storage apparatus from a preset data storage location; where the preset data storage location may include, but is not limited to, a distributed database or a local storage location of the control apparatus.

Certainly, the control apparatus may alternatively acquire the expected voltage of the energy storage apparatus through other methods.

Step S1302: Acquire measured voltages of at least two energy storage sub-modules connected to a first energy storage main line of the energy storage apparatus.

In this step, the control apparatus may acquire the measured voltages of the energy storage sub-modules connected to the first energy storage main line of the energy storage apparatus.

By way of example, the measured voltage of the energy storage sub-module involved in the embodiments of the present application may include, but is not limited to, the voltage of a balancing capacitor or a balancing resistor in the energy storage sub-module.

It should be understood that a voltage detection unit for detecting the measured voltage of each energy storage sub-module may be provided in the energy storage apparatus.

Step S1303: Control target engaged energy storage sub-modules on two sides of a first node in the first energy storage main line to be in a connected state based on the expected voltage and the measured voltages of at least two energy storage sub-modules, where a difference between total voltage magnitudes of the target engaged energy storage sub-modules on the two sides of the first node is less than a preset threshold, and a difference between a total voltage and the expected voltage of the energy storage apparatus is less than a preset difference.

In this step, the control apparatus may control the target engaged energy storage sub-modules on the first side of the first node to be in a connected state and the target engaged energy storage sub-modules on the second side of the first node to be in a connected state based on the expected voltage and the measured voltages of at least two energy storage sub-modules.

By way of example, in the embodiments of the present application, the difference between the total voltage magnitude of the target engaged energy storage sub-modules on the first side of the first node and the total voltage magnitude of the target engaged energy storage sub-modules on the second side of the first node is less than a preset threshold, and the difference between the total voltage and the expected voltage of the energy storage apparatus is less than a preset difference (a very small value). As a result, the voltage at the two ends of the energy storage apparatus can be substantially stably controlled at the corresponding expected voltage.

In one possible implementation, the control apparatus may control the target engaged energy storage sub-modules on the first side of the first node to be in a connected state and the target engaged energy storage sub-modules on the second side of the first node to be in a connected state according to a preset connection control strategy based on the expected voltage and the measured voltages of at least two energy storage sub-modules, so that the difference between the total voltage magnitudes of the target engaged energy storage sub-modules on the two sides of the first node is less than the preset threshold, and the difference between the total voltage and the expected voltage of the energy storage apparatus is less than the preset difference.

By way of example, the preset connection control strategy may be used to indicate determining the number of target engaged energy storage sub-modules on the two sides of the first node in the first energy storage main line, and controlling the target engaged energy storage sub-modules on the two sides of the first node to be in a connected state based on the number of target engaged energy storage sub-modules on the two sides of the first node.

In another possible implementation, the control apparatus may input the expected voltage and the measured voltages of at least two energy storage sub-modules into a preset connection control model to acquire identification information of the target engaged energy storage sub-modules on the two sides of the first node output by the preset connection control model, and control the target engaged energy storage sub-modules on the two sides of the first node to be in a connected state based on the identification information of the target engaged energy storage sub-modules on the two sides of the first node, so that the difference between the total voltage magnitudes of the target engaged energy storage sub-modules on the two sides of the first node is less than the preset threshold, and a difference between the total voltage and the expected voltage of the energy storage apparatus is less than the preset difference. By way of example, the preset connection control model may include, but is not limited to, a machine learning model.

Certainly, the control apparatus may alternatively control the target engaged energy storage sub-modules on the two sides of the first node in the first energy storage main line to be in a connected state based on the expected voltage and the measured voltages of at least two energy storage sub-modules through other methods.

In summary, in the embodiments of the present application, the expected voltage of the energy storage apparatus and the measured voltages of at least two energy storage sub-modules connected to the first energy storage main line of the energy storage apparatus are acquired. Further, the target engaged energy storage sub-modules on the two sides of the first node in the first energy storage main line are controlled to be in a connected state based on the expected voltage and the measured voltages of at least two energy storage sub-modules, where a difference between the total voltage magnitudes of the target engaged energy storage sub-modules on the two sides of the first node is less than a preset threshold, and a difference between the total voltage and the expected voltage of the energy storage apparatus is less than a preset difference. As a result, the voltage at the two ends of the energy storage apparatus can be substantially stably controlled at the corresponding expected voltage. It can be seen that the embodiments of the present application can improve the stability of the voltage at the two ends of the energy storage apparatus, thereby facilitating improvement of operational reliability of components within the energy storage apparatus.

It should be noted that, when the energy storage apparatus further includes a second node disposed on a second energy storage main line and a second grounding circuit connected to the second node, the control apparatus may also control target engaged energy storage sub-modules on two sides of the second node in the second energy storage main line to be in a connected state based on the expected voltage and the measured voltages of at least two energy storage sub-modules in the second energy storage main line. The specific control method may refer to the related content of the step S103, and details are not be repeated here.

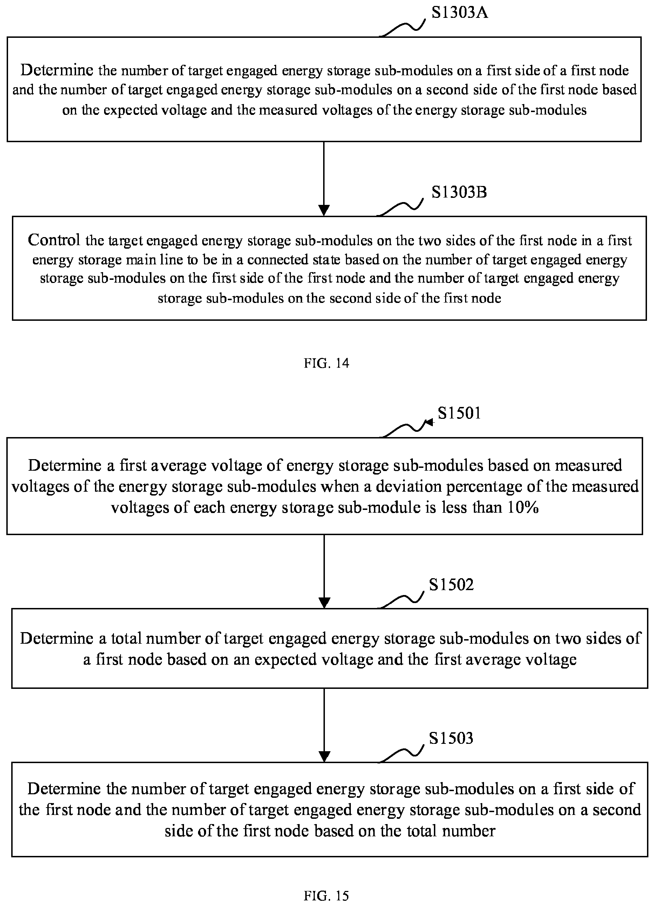

In some embodiments, FIG. 14 is a schematic flowchart of a control method for an energy storage apparatus according to other embodiments of the present application. Based on the above embodiments, the embodiments of the present application provide an exemplary description of the related content of the step S1303. As shown in FIG. 14, step S1303 of the embodiments of the present application may include the following steps.

Step S1303A: Determine the number of target engaged energy storage sub-modules on a first side of the first node and the number of target engaged energy storage sub-modules on a second side of the first node based on the expected voltage and the measured voltages of the energy storage sub-modules.

In this step, the control apparatus may determine the number of target engaged energy storage sub-modules (that is, energy storage sub-modules that need to be in a connected state) on the first side of the first node and the number of target engaged energy storage sub-modules on the second side of the first node according to a preset voltage control strategy based on the expected voltage and the measured voltages of the energy storage sub-modules; where the preset voltage control strategy may include, but is not limited to, an overall voltage control sub-strategy or a grouped voltage control sub-strategy.

By way of example, the overall voltage control sub-strategy is used to indicate determining the number of target engaged energy storage sub-modules on the two sides of the first node by considering all energy storage sub-modules on the two sides of the first node in the energy storage apparatus as a whole based on the measured voltages of the energy storage sub-modules in the energy storage apparatus.

By way of example, the grouped voltage control sub-strategy is used to indicate determining the target engaged energy storage sub-modules on the first side of the first node based on the measured voltages of the energy storage sub-modules on the first side of the first node in the energy storage apparatus, and determining the number of target engaged energy storage sub-modules on the second side of the first node based on the measured voltages of the energy storage sub-modules on the second side of the first node in the energy storage apparatus.

Certainly, the control apparatus may alternatively determine the number of target engaged energy storage sub-modules on the first side of the first node and the number of target engaged energy storage sub-modules on the second side of the first node based on the expected voltage and the measured voltages of the energy storage sub-modules through other methods.

Step S1303B: Control the target engaged energy storage sub-modules on the two sides of the first node in the first energy storage main line to be in a connected state based on the number of target engaged energy storage sub-modules on the first side of the first node and the number of target engaged energy storage sub-modules on the second side of the first node.

In this step, the control apparatus may control the target engaged energy storage sub-modules on the first side of the first node in the first energy storage main line to be in a connected state based on the number of target engaged energy storage sub-modules on the first side of the first node, and control the target engaged energy storage sub-modules on the second side of the first node in the first energy storage main line to be in a connected state based on the number of target engaged energy storage sub-modules on the second side of the first node, so that the difference between the total voltage magnitudes of the target engaged energy storage sub-modules on the two sides of the first node is less than the preset threshold, and the difference between the total voltage and the expected voltage of the energy storage apparatus is less than the preset difference. This ensures that, in cases of fluctuations in the switching state and/or switching position of the energy storage sub-modules within the energy storage apparatus, the voltage at the two ends of the energy storage apparatus can be substantially stably controlled at the corresponding expected voltage, thereby facilitating further improvement of the stability of the voltage at the two ends of the energy storage apparatus.

By way of example, when the deviation percentage of the measured voltages of each energy storage sub-module is less than 10%, the numbers of the target engaged energy storage sub-modules on the two sides of the first node may be equal or differ by 1. This ensures that, in cases of fluctuations in the switching state and/or switching position of the energy storage sub-modules within the energy storage apparatus, the difference between the total voltage magnitudes of the target engaged energy storage sub-modules on the two sides of the first node is less than the preset threshold, and the difference between the total voltage and the expected voltage of the energy storage apparatus is less than the preset difference, and the voltage at the two ends of the energy storage apparatus can be substantially stably controlled at the corresponding expected voltage without being affected by changes in the equivalent grounding resistance of the cooling water pipeline, changes in the switching state of the energy storage sub-modules, and/or changes in the switching position, thereby facilitating further improvement of the stability of the voltage at the two ends of the energy storage apparatus.

As a further example, when the deviation percentage of the measured voltages of each energy storage sub-module 312 is not less than 10%, the difference between the number of target engaged energy storage sub-modules on the two sides of the first node may be greater than 1 and less than a preset number threshold. This ensures that, in cases of fluctuations in the switching state and/or switching position of the energy storage sub-modules within the energy storage apparatus, the difference between the total voltage magnitudes of the target engaged energy storage sub-modules on the two sides of the first node is less than the preset threshold, and the difference between the total voltage and the expected voltage of the energy storage apparatus is less than the preset difference. As a result, the voltage at the two ends of the energy storage apparatus can be substantially stably controlled at the corresponding expected voltage without being affected by changes in the equivalent grounding resistance of the cooling water pipeline, changes in the switching state of the energy storage sub-modules, and/or changes in the switching position. This not only facilitates further improvement of the stability of the voltage at the two ends of the energy storage apparatus but also reduces the requirement for direct-current voltage insulation level to ground for high-voltage equipment in the energy storage apparatus, thereby saving costs for the energy storage apparatus.

In summary, in the embodiments of the present application, by determining the number of target engaged energy storage sub-modules on the first side of the first node and the number of target engaged energy storage sub-modules on the second side of the first node based on the expected voltage and the measured voltages of the energy storage sub-modules, and further, by controlling the target engaged energy storage sub-modules on the two sides of the first node in the first energy storage main line to be in a connected state based on the number of target engaged energy storage sub-modules on the first side of the first node and the number of target engaged energy storage sub-modules on the second side of the first node, the difference between the total voltage magnitudes of the target engaged energy storage sub-modules on the two sides of the first node can be less than a preset threshold, and a difference between the total voltage and the expected voltage of the energy storage apparatus can be less than a preset difference. It can be seen that in the embodiments of the present application, by controlling the target engaged energy storage sub-modules on the two sides of the first node in the first energy storage main line to be in a connected state based on the number of target engaged energy storage sub-modules on the two sides of the first node, in cases of fluctuations in the switching state and/or switching position of the energy storage sub-modules within the energy storage apparatus, the voltage at the two ends of the energy storage apparatus can be substantially stably controlled at the corresponding expected voltage, thereby facilitating further improvement of the stability of the voltage at the two ends of the energy storage apparatus.

In some embodiments, FIG. 15 is a schematic flowchart of a method for determining the number of target engaged energy storage sub-modules on two sides of a first node according to some embodiments of the present application. Based on the above embodiments, the embodiments of the present application describe a possible implementation of "Determine the number of target engaged energy storage sub-modules on a first side of the first node and the number of target engaged energy storage sub-modules on a second side of the first node based on the expected voltage and the measured voltages of the energy storage sub-modules" in step S1303A. As shown in FIG. 15, the step S1303A may include the following steps.

Step S1501: Determine a first average voltage of the energy storage sub-modules based on the measured voltages of the energy storage sub-modules when a deviation percentage of the measured voltages of each energy storage sub-module is less than 10%.

In this step, when the deviation percentage of the measured voltages of each energy storage sub-module is less than 10%, the control apparatus may determine, according to an overall voltage control sub-strategy, the first average voltage of the energy storage sub-modules based on the measured voltages of the energy storage sub-modules.

By way of example, the control apparatus may determine the first average voltage of the energy storage sub-modules based on the measured voltages of the energy storage sub-modules with reference to the following formula (1).

$$U_{c-avg1} = \frac{\sum\limits_{i=1}^{N} U_{ci}}{N} \quad \text{formula (1)}$$

where $U_{ci}$ represents the measured voltage of the i-th energy storage sub-module in the energy storage apparatus, and $U_{c-avg1}$ represents the first average voltage.

Certainly, the control apparatus may alternatively determine the first average voltage of the energy storage sub-modules based on the measured voltages of the energy storage sub-modules with reference to other modified or equivalent formulas of the formula (1).

Step S1502: Determine a total number of target engaged energy storage sub-modules on the two sides of the first node based on the expected voltage and the first average voltage.

In this step, the control apparatus may determine, according to an overall voltage control sub-strategy, the total number of target engaged energy storage sub-modules on the two sides of the first node based on the expected voltage and the first average voltage.

By way of example, the control apparatus may determine the total number of target engaged energy storage sub-modules on the two sides of the first node based on the expected voltage and the first average voltage with reference to the following formula (2):

$$n = \frac{U_{ref}}{U_{c-avg1}} \quad \text{formula (2)}$$

where n represents the total number, and $U_{ref}$ represents the expected voltage of the energy storage apparatus.

It should be noted that when the expected voltage and the first average voltage cannot be divided evenly, the total number may be determined by rounding to the nearest integer.

Certainly, the control apparatus may alternatively determine the total number based on the expected voltage and the first average voltage with reference to other modified or equivalent formulas of the formula (2).

Step S1503: Determine the number of target engaged energy storage sub-modules on the first side of the first node and the number of target engaged energy storage sub-modules on the second side of the first node based on the total number.

In this step, the control apparatus may determine, according to an overall voltage control sub-strategy, the number of target engaged energy storage sub-modules on the first side of the first node and the number of target engaged energy storage sub-modules on the second side of the first node based on the total number.

In one possible implementation, under the condition that the total number is even, the number of target engaged energy storage sub-modules on the first side of the first node and the number of target engaged energy storage sub-modules on the second side of the first node are both determined to be equal to one-half of the total number.

In this implementation, when the total number is even, the control apparatus may take one-half of the total number as the number of target engaged energy storage sub-modules on the first side of the first node and the number of target engaged energy storage sub-modules on the second side of the first node, respectively.

It can be seen that in this implementation, the number of target engaged energy storage sub-modules on the first side of the first node may be the same as the number of target engaged energy storage sub-modules on the second side of the first node, so that in cases of fluctuations in the switching state and/or switching position of the energy storage sub-modules within the energy storage apparatus, the voltage at the two ends of the energy storage apparatus can be substantially stably controlled at the corresponding expected voltage, thereby facilitating further improvement of the stability of the voltage at the two ends of the energy storage apparatus.

In another possible implementation, under the condition that the total number is odd, the number of target engaged energy storage sub-modules on the first side of the first node and the number of target engaged energy storage sub-modules on the second side of the first node are respectively determined to be equal to respective different values of one-half of a difference between the total number and a preset value and one-half of a sum of the total number and the preset value.

By way of example, the preset value in the embodiments of the present application may be an odd number. For example, the preset value may include, but is not limited to, 1.

In this implementation, when the total number n is odd, the control apparatus may take one-half of the difference between the total number n and a preset value n0 as the number of target engaged energy storage sub-modules on the first side of the first node, and one-half of a sum of the total number n and the preset value n0 as the number of target engaged energy storage sub-modules on the second side of the first node. Certainly, the control apparatus may alternatively take one-half of the difference between the total number n and the preset value n0 as the number of target engaged energy storage sub-modules on the second side of the first node, and one-half of the sum of the total number n and the preset value n0 as the number of target engaged energy storage sub-modules on the first side of the first node.

It should be noted that, to enable charging or discharging of the energy storage sub-modules on the two sides of the first node that require charging or discharging more urgently, in the embodiments of the present application, the control apparatus may further determine the number of target engaged energy storage sub-modules on the first side of the first node and the number of target engaged energy storage sub-modules on the second side of the first node based on the SOC of the energy storage sub-modules on the first side of the first node and the SOC of the energy storage sub-modules on the second side of the first node.

By way of example, when the charge-discharge state of the energy storage apparatus is a charging state, the control apparatus may obtain a first sequence by sorting the energy storage sub-modules on the first side of the first node according to an ascending order of their SOCs, and obtain a second sequence by sorting the energy storage sub-modules on the second side of the first node according to an ascending order of their SOCs.

Further, under the condition that the SOC of the $((n-n0)/2+1)$-th energy storage sub-module in the first sequence is less than the SOC of the $((n-n0)/2+1)$-th energy storage sub-module in the second sequence, the control apparatus may take one-half of the sum of the total number n and the preset value n0 as the number of target engaged energy storage sub-modules on the first side of the first node, and one-half of the difference between the total number n and the preset value n0 as the number of target engaged energy storage sub-modules on the second side of the first node. Under the condition that the SOC of the $((n-n0)/2+1)$-th energy storage sub-module in the first sequence is greater than the SOC of the $((n-n0)/2+1)$-th energy storage sub-module in the second sequence, the control apparatus may take one-half of the sum of the total number n and the preset value n0 as the number of target engaged energy storage sub-modules on the second side of the first node, and one-half of the difference between the total number n and the preset value n0 as the number of target engaged energy storage sub-modules on the first side of the first node.

As a further example, when the charge-discharge state of the energy storage apparatus is a discharging state, the control apparatus may obtain a third sequence by sorting the energy storage sub-modules on the first side of the first node according to a descending order of their SOCs, and obtain a fourth sequence by sorting the energy storage sub-modules on the second side of the first node according to a descending order of their SOCs.

Further, under the condition that the SOC of the $((n-n0)/2+1)$-th energy storage sub-module in the third sequence is greater than the SOC of the $((n-n0)/2+1)$-th energy storage sub-module in the fourth sequence, the control apparatus may take one-half of the sum of the total number n and the preset value n0 as the number of target engaged energy storage sub-modules on the first side of the first node, and one-half of the difference between the total number n and the preset value n0 as the number of target engaged energy storage sub-modules on the second side of the first node. Under the condition that the SOC of the $((n-n0)/2+1)$-th energy storage sub-module in the third sequence is less than the SOC of the $((n-n0)/2+1)$-th energy storage sub-module in the fourth sequence, the control apparatus may take one-half of the sum of the total number n and the preset value n0 as the number of target engaged energy storage sub-modules on the second side of the first node, and one-half of the difference between the total number n and the preset value n0 as the number of target engaged energy storage sub-modules on the first side of the first node.

It can be seen that in this implementation, by determining that the number of target engaged energy storage sub-modules on the first side of the first node and the number of target engaged energy storage sub-modules on the second side of the first node are respectively equal to one-half of the difference between the total number and a preset value and one-half of the sum of the total number and the preset value, the difference in the number of target engaged energy storage sub-modules on the first side and the second side of the first node may be 1, so that in cases of fluctuations in the switching state and/or switching position of the energy storage sub-modules within the energy storage apparatus, the voltage at the two ends of the energy storage apparatus can be substantially stably controlled at the corresponding expected voltage, thereby facilitating further improvement of the stability of the voltage at the two ends of the energy storage apparatus.

In summary, in the embodiments of the present application, the total number of target engaged energy storage sub-modules on the two sides of the first node is determined based on the expected voltage and the first average voltage of the energy storage sub-modules, and further, the number of target engaged energy storage sub-modules on the first side of the first node and the number of target engaged energy storage sub-modules on the second side of the first node are determined based on the total number. It can be seen that in the embodiments of the present application, by determining, according to an overall voltage control sub-strategy, the number of target engaged energy storage sub-modules on the first side of the first node and the number of target engaged energy storage sub-modules on the second side of the first node based on the expected voltage and the first average voltage of the energy storage sub-modules, the number of target engaged energy storage sub-modules on the first side of the first node and the number of target engaged energy storage sub-modules on the second side of the first node can be determined more comprehensively and reasonably.

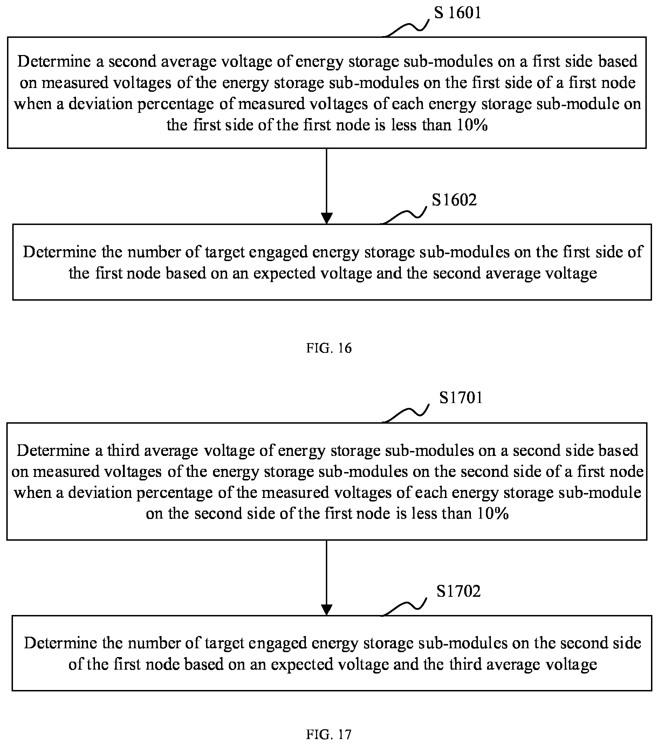

In some embodiments, FIG. 16 is a schematic flowchart of a method for determining the number of target engaged energy storage sub-modules on a first side of a first node according to some embodiments of the present application. Based on the above embodiments, the embodiments of the present application describe a possible implementation of "Determine the number of target engaged energy storage sub-modules on a first side of the first node based on the expected voltage and the measured voltages of the energy storage sub-modules" in the step S1303A. As shown in FIG. 16, the step S1303A may include the following steps.

Step S1601: Determine a second average voltage of the energy storage sub-modules on the first side based on the measured voltages of the energy storage sub-modules on the first side of the first node when a deviation percentage of the measured voltages of each energy storage sub-module on the first side of the first node is less than 10%.

In this step, when the deviation percentage of the measured voltages of each energy storage sub-module on the first side of the first node is less than 10%, the control apparatus may determine, according to a grouped voltage control sub-strategy, the second average voltage of the energy storage sub-modules on the first side based on the measured voltages of the energy storage sub-modules on the first side of the first node.

By way of example, the control apparatus may determine the second average voltage of the energy storage sub-modules on the first side based on the measured voltages of the energy storage sub-modules on the first side of the first node with reference to the following formula (3):

$$U_{c-avg2} = \frac{\sum_{i=1}^{N/2} U_{c1i}}{N/2} \quad \text{formula (3)}$$

where Uc1i represents the voltage of the i-th energy storage sub-module on the first side of the first node, and Uc-avg2 represents the second average voltage.

Certainly, the control apparatus may alternatively determine the second average voltage of the energy storage sub-modules on the first side based on the measured voltages of the energy storage sub-modules on the first side of the first node with reference to other modified or equivalent formulas of the formula (3).

Step S1602: Determine the number of target engaged energy storage sub-modules on the first side of the first node based on the expected voltage and the second average voltage.

In this step, the control apparatus may determine, according to a grouped voltage control sub-strategy, the number of target engaged energy storage sub-modules on the first side of the first node based on the expected voltage and the second average voltage.

By way of example, the control apparatus may determine the number of target engaged energy storage sub-modules on the first side of the first node based on the expected voltage and the second average voltage with reference to the following formula (4):

$$n1 = \frac{U_{ref}}{2U_{c-avg2}} \quad \text{formula (4)}$$

where n1 represents the number of target engaged energy storage sub-modules on the first side of the first node.

It should be noted that when the expected voltage and the second average voltage cannot be divided evenly, the number of target engaged energy storage sub-modules on the first side of the first node may be determined by rounding to the nearest integer.

Certainly, the control apparatus may alternatively determine the number of target engaged energy storage sub-modules on the first side of the first node based on the expected voltage and the second average voltage with reference to other modified or equivalent formulas of the formula (4).

It should be noted that the control apparatus may determine, according to an overall voltage control sub-strategy, the number of target engaged energy storage sub-modules on the second side of the first node based on the expected voltage and the measured voltages of the energy storage sub-modules, or may determine, according to a grouped voltage control sub-strategy, the number of target engaged energy storage sub-modules on the second side of the first node, or may determine the number of target engaged energy storage sub-modules on the second side of the first node through other methods.

In summary, in the embodiments of the present application, when the deviation percentage of the measured voltages of each energy storage sub-module on the first side of the first node is less than 10%, the second average voltage of the energy storage sub-modules on the first side is determined based on the measured voltages of the energy storage sub-modules on the first side of the first node, and the number of target engaged energy storage sub-modules on the first side of the first node is determined based on the expected voltage and the second average voltage. It can be seen that in the embodiments of the present application, by determining, according to a grouped voltage control sub-strategy, the number of target engaged energy storage sub-modules on the first side of the first node based on the expected voltage and the measured voltages of the energy storage sub-modules on the first side of the first node, the number of target engaged energy storage sub-modules on the first side of the first node can be determined more flexibly and accurately.

In some embodiments, FIG. 17 is a schematic flowchart of a method for determining the number of target engaged energy storage sub-modules on a second side of a first node according to some embodiments of the present application. Based on the above embodiments, the embodiments of the present application describe a possible implementation of "Determine the number of target engaged energy storage sub-modules on a second side of the first node based on the expected voltage and the measured voltages of the energy storage sub-modules" in the step S1303A. As shown in FIG. 17, the step S1303A may include the following steps.

Step S1701: Determine a third average voltage of the energy storage sub-modules on the second side based on the measured voltages of the energy storage sub-modules on the second side of the first node when a deviation percentage of the measured voltages of each energy storage sub-module on the second side of the first node is less than 10%.

In this step, when the deviation percentage of the measured voltages of each energy storage sub-module on the second side of the first node is less than 10%, the control apparatus may determine, according to a grouped voltage control sub-strategy, the third average voltage of the energy storage sub-modules on the second side based on the measured voltages of the energy storage sub-modules on the second side of the first node.

By way of example, the control apparatus may determine the third average voltage of the energy storage sub-modules on the second side based on the measured voltages of the energy storage sub-modules on the second side of the first node with reference to the following formula (5):

$$U_{c-avg3} = \frac{\sum\limits_{i=N/2+1}^{N} U_{c2i}}{N/2} \quad \text{formula (5)}$$

where $U_{c2i}$ represents the voltage of the i-th energy storage sub-module on the second side of the first node, and $U_{c-avg3}$ represents the third average voltage.

Certainly, the control apparatus may alternatively determine the third average voltage of the energy storage sub-modules on the second side based on the voltages of the energy storage sub-modules on the second side of the first node with reference to other modified or equivalent formulas of the formula (5).

Step S1702: Determine the number of target engaged energy storage sub-modules on the second side of the first node based on the expected voltage and the third average voltage.

In this step, the control apparatus may determine, according to a grouped voltage control sub-strategy, the number of target engaged energy storage sub-modules on the second side of the first node based on the expected voltage and the third average voltage.

By way of example, the control apparatus may determine the number of target engaged energy storage sub-modules on the second side of the first node based on the expected voltage and the third average voltage with reference to the following formula (6):

$$n2 = \frac{U_{ref}}{2U_{c-avg3}} \quad \text{formula (6)}$$

where n2 represents the number of target engaged energy storage sub-modules on the second side of the first node.

It should be noted that when the expected voltage and the third average voltage cannot be divided evenly, the number of target engaged energy storage sub-modules on the second side of the first node may be determined by rounding to the nearest integer.

Certainly, the control apparatus may alternatively determine the number of target engaged energy storage sub-modules on the second side of the first node based on the expected voltage and the third average voltage with reference to other modified or equivalent formulas of the formula (6).

It should be noted that the control apparatus may determine, according to an overall voltage control sub-strategy, the number of target engaged energy storage sub-modules on the first side of the first node based on the expected voltage and the measured voltages of the energy storage sub-modules, or may determine the number of target engaged energy storage sub-modules on the first side of the first node according to a grouped voltage control sub-strategy, or may determine the number of target engaged energy storage sub-modules on the first side of the first node through other methods.

In summary, in the embodiments of the present application, when the deviation percentage of the measured voltages of each energy storage sub-module on the second side of the first node is less than 10%, the third average voltage of the energy storage sub-modules on the second side is determined based on the measured voltages of the energy storage sub-modules on the second side of the first node, and the number of target engaged energy storage sub-modules on the second side of the first node is determined based on the expected voltage and the third average voltage. It can be seen that in the embodiments of the present application, by determining, according to a grouped voltage control sub-strategy, the number of target engaged energy storage sub-modules on the second side of the first node based on the expected voltage and the measured voltages of the energy storage sub-modules on the second side of the first node, the number of target engaged energy storage sub-modules on the second side of the first node can be determined more flexibly and accurately.

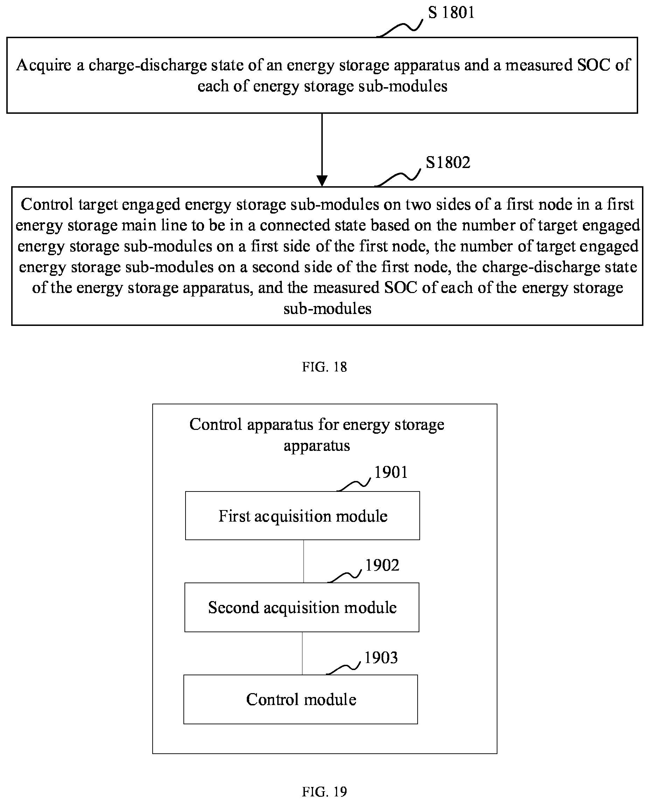

In some embodiments, FIG. 18 is a schematic flowchart of a control method for controlling target engaged energy storage sub-modules on two sides of a first node to be in a connected state according to some embodiments of the present application. Based on the above embodiments, the embodiments of the present application describe a possible implementation of "Control the target engaged energy storage sub-modules on the two sides of the first node in the first energy storage main line to be in a connected state based on the number of target engaged energy storage sub-modules on the first side of the first node and the number of target engaged energy storage sub-modules on the second side of the first node" in the step S1303B. As shown in FIG. 18, the step S1303B may include the following steps.

Step S1801: Acquire a charge-discharge state of the energy storage apparatus and a measured SOC of each of the energy storage sub-modules.

By way of example, the charge-discharge state of the energy storage apparatus in the embodiments of the present application may include, but is not limited to, a charging state or a discharging state.

It should be understood that a state detection unit for detecting the charge-discharge state of the energy storage apparatus and an SOC detection unit for detecting the measured SOC of each of the energy storage sub-modules may be provided in the energy storage apparatus.

Step S1802: Control the target engaged energy storage sub-modules on the two sides of the first node in the first energy storage main line to be in a connected state based on the number of target engaged energy storage sub-modules on the first side of the first node, the number of target engaged energy storage sub-modules on the second side of the first node, the charge-discharge state of the energy storage apparatus, and the measured SOC of each of the energy storage sub-modules.

In this step, the control apparatus may control the target engaged energy storage sub-modules on the first side of the first node to be in a connected state based on the number of target engaged energy storage sub-modules on the first side of the first node, the measured SOC of the energy storage sub-modules on the first side of the first node, and the charge-discharge state of the energy storage apparatus, so as to charge or discharge the energy storage sub-modules on the first side of the first node that require charging or discharging more urgently. In addition, the control apparatus may control the target engaged energy storage sub-modules on the second side of the first node to be in a connected state based on the number of target engaged energy storage sub-modules on the second side of the first node, the measured SOC of the energy storage sub-modules on the second side of the first node, and the charge-discharge state of the energy storage apparatus, so as to charge or discharge the energy storage sub-modules on the second side of the first node that require charging or discharging more urgently.

It can be seen that in the embodiments of the present application, by further considering the measured SOC of each of the energy storage sub-modules and the charge-discharge state of the energy storage apparatus on the basis of the number of target engaged energy storage sub-modules on the first side of the first node and the number of target engaged energy storage sub-modules on the second side of the first node, charging or discharging can be performed on the energy storage sub-modules on the two sides of the first node that require charging or discharging more urgently, thereby not only facilitating improvement of the stability of the voltage at the two ends of the energy storage apparatus but also facilitating improvement of charge-discharge balance among the energy storage sub-modules of the energy storage apparatus.

In one possible implementation, when the charge-discharge state of the energy storage apparatus is a charging state, the first nl energy storage sub-modules on the first side of the first node are selected as target engaged sub-modules according to an ascending order of measured SOCs of the energy storage sub-modules on the first side of the first node, and each of the target engaged sub-modules is controlled to be in a connected state, where n1 is the number of target engaged energy storage sub-modules on the first side of the first node; and the first n2 energy storage sub-modules on the second side of the first node are selected as target engaged sub-modules according to an ascending order of measured SOCs of the energy storage sub-modules on the second side of the first node, and each of the target engaged sub-modules is controlled to be in a connected state, where n2 is the number of target engaged energy storage sub-modules on the second side of the first node.

In this implementation, when the charge-discharge state of the energy storage apparatus is a charging state, the control apparatus may select the first n1 energy storage sub-modules on the first side of the first node as target engaged energy storage sub-modules according to an ascending order of SOCs of the energy storage sub-modules on the first side of the first node, and control these target engaged energy storage sub-modules to be in a connected state, so as to charge the first n1 energy storage sub-modules with relatively lower SOC on the first side of the first node. In addition, the control apparatus may select the first n2 energy storage sub-modules on the second side of the first node as target engaged energy storage sub-modules according to an ascending order of SOCs of the energy storage sub-modules on the second side of the first node, and control these target engaged energy storage sub-modules to be in a connected state, so as to charge the first n2 energy storage sub-modules with relatively lower SOC on the second side of the first node.

It can be seen that in this implementation, when the charge-discharge state of the energy storage apparatus is a charging state, by further considering the measured SOC of each of the energy storage sub-modules on the basis of the number of target engaged energy storage sub-modules on the two sides of the first node, a plurality of energy storage sub-modules with relatively lower measured SOC on the two sides of the first node can be selected as target engaged energy storage sub-modules for charging, thereby not only facilitating improvement of the stability of the voltage at the two ends of the energy storage apparatus but also facilitating improvement of charging balance among the energy storage sub-modules on the two sides of the first node.

In another possible implementation, when the charge-discharge state of the energy storage apparatus is a discharging state, the first n1 energy storage sub-modules on the first side of the first node are selected as target engaged sub-modules according to a descending order of measured SOCs of the energy storage sub-modules on the first side of the first node, and each of the target engaged sub-modules is controlled to be in a connected state; and the first n2 energy storage sub-modules on the second side of the first node are selected as target engaged sub-modules according to a descending order of measured SOCs of the energy storage sub-modules on the second side of the first node, and each of the target engaged sub-modules is controlled to be in a connected state.

In this implementation, when the charge-discharge state of the energy storage apparatus is a discharging state, the control apparatus may select the first n1 energy storage sub-modules on the first side of the first node as target engaged sub-modules according to a descending order of SOCs of the energy storage sub-modules on the first side of the first node, and control these target engaged sub-modules to be in a connected state, so as to discharge the first n1 energy storage sub-modules with relatively higher SOC on the first side of the first node. In addition, the control apparatus may select the first n2 energy storage sub-modules on the second side of the first node as target engaged sub-modules according to a descending order of SOCs of the energy storage sub-modules on the second side of the first node, and control these target engaged sub-modules to be in a connected state, so as to discharge the first n2 energy storage sub-modules with relatively higher SOC on the second side of the first node.

It can be seen that in this implementation, when the charge-discharge state of the energy storage apparatus is a discharging state, by further considering the measured SOC of each of the energy storage sub-modules on the basis of the number of target engaged energy storage sub-modules on the second side of the first node, a plurality of energy storage sub-modules with relatively higher measured SOC on the two sides of the first node can be selected as target engaged energy storage sub-modules for discharging, thereby not only facilitating improvement of the stability of the voltage at the two ends of the energy storage apparatus but also facilitating improvement of charging balance among the energy storage sub-modules on the two sides of the first node.

In some embodiments, based on the above embodiments, for ease of understanding, the embodiments of the present application describe the overall process of the overall voltage control sub-strategy using the preset value n0 as 1 as an example.

(1) The control apparatus may acquire the expected voltage of the energy storage apparatus.

(2) The control apparatus may acquire the measured voltages of the energy storage sub-modules in the first energy storage main line in the energy storage apparatus, and determine the first average voltage of the energy storage sub-modules based on the measured voltages of the energy storage sub-modules, where the deviation percentage of the measured voltages of each energy storage sub-module may be less than 10%.

(3) The control apparatus may determine the total number n of target engaged energy storage sub-modules on the two sides of the first node based on the expected voltage and the first average voltage.

(4a) The charge-discharge state of the energy storage apparatus is a charging state

(4a1) With the first node in the first energy storage main line as the boundary, the control apparatus may obtain a first sequence by sorting the energy storage sub-modules on the first side of the first node according to an ascending order of their measured SOCs, and obtain a second sequence by sorting the energy storage sub-modules on the second side of the first node according to an ascending order of their measured SOCs.

(4a2) Under the condition that the total number n is even, the control apparatus may select the first n/2 (that is, n1) energy storage sub-modules in the first sequence as target engaged sub-modules and control these target engaged sub-modules to be in a connected state, and select the first n/2 (that is, n2) energy storage sub-modules in the second sequence as target engaged sub-modules and control these target engaged sub-modules to be in a connected state.

Under the condition that the total number n is odd, the control apparatus may select the first (n-1)/2 energy storage sub-modules in the first sequence as target engaged sub-modules and control these target engaged sub-modules to be in a connected state, and select the first (n-1)/2 energy storage sub-modules in the second sequence as target engaged sub-modules and control these target engaged sub-modules to be in a connected state; and further, the control apparatus may also select, from the ((n-1)/2+1)-th energy storage sub-module in the first sequence and the ((n-1)/2+1)-th energy storage sub-module in the second sequence, an energy storage sub-module with a relatively lower measured SOC as a target engaged sub-module and control this target engaged sub-module to be in a connected state.

(4b) The charge-discharge state of the energy storage apparatus is a discharging state

(4b1) With the first node in the first energy storage main line as the boundary, the control apparatus may obtain a third sequence by sorting the energy storage sub-modules on the first side of the first node according to a descending order of their measured SOCs, and obtain a fourth sequence by sorting the energy storage sub-modules on the second side of the first node according to a descending order of their measured SOCs.

(4b2) Under the condition that the total number n is even, the control apparatus may select the first n/2 (that is, n1) energy storage sub-modules in the third sequence as target engaged sub-modules and control these target engaged sub-modules to be in a connected state, and select the first n/2 (that is, n2) energy storage sub-modules in the fourth sequence as target engaged sub-modules and control these target engaged sub-modules to be in a connected state.

Under the condition that the total number n is odd, the control apparatus may select the first (n-1)/2 energy storage sub-modules in the third sequence as target engaged sub-modules and control these target engaged sub-modules to be in a connected state, and select the first (n-1)/2 energy storage sub-modules in the fourth sequence as target engaged sub-modules and control these target engaged sub-modules to be in a connected state; and further, the control apparatus may also select, from the ((n-1)/2+1)-th energy storage sub-module in the third sequence and the ((n-1)/2+1)-th energy storage sub-module in the fourth sequence, an energy storage sub-module with a relatively higher measured SOC as a target engaged sub-module and control this target engaged sub-module to be in a connected state.

It should be noted that the implementation principles and technical effects of the steps in the embodiments of the present application are similar to the related content in the above embodiments, and details are not be repeated here.

In some embodiments, based on the above embodiments, for ease of understanding, the embodiments of the present application describe the overall process of the grouped voltage control sub-strategy.

(1) The control apparatus may acquire the expected voltage of the energy storage apparatus.

(2) The control apparatus may acquire the measured voltages of the energy storage sub-modules in the first energy storage main line in the energy storage apparatus, where the deviation percentage of the measured voltages of each energy storage sub-module may be less than 10%.

(3) The control apparatus may determine the second average voltage of the energy storage sub-modules on the first side based on the measured voltages of the energy storage sub-modules on the first side of the first node, and determine the third average voltage of the energy storage sub-modules on the second side based on the measured voltages of the energy storage sub-modules on the second side of the first node.

(4) The control apparatus may determine the number n1 of target engaged energy storage sub-modules on the first side of the first node based on the expected voltage and the second average voltage, and determine the number n2 of target engaged energy storage sub-modules on the second side of the first node based on the expected voltage and the third average voltage.

(5a) The charge-discharge state of the energy storage apparatus is a charging state

(5a1) With the first node in the first energy storage main line as the boundary, the control apparatus may obtain a first sequence by sorting the energy storage sub-modules on the first side of the first node according to an ascending order of their measured SOCs, and obtain a second sequence by sorting the energy storage sub-modules on the second side of the first node according to an ascending order of their measured SOCs.

(5a2) The control apparatus may select the first n1 energy storage sub-modules in the first sequence as target engaged sub-modules and control these target engaged sub-modules to be in a connected state, and select the first n2 energy storage sub-modules in the second sequence as target engaged sub-modules and control these target engaged sub-modules to be in a connected state.

(5b) The charge-discharge state of the energy storage apparatus is a discharging state

(5b1) With the first node in the first energy storage main line as the boundary, the control apparatus may obtain a third sequence by sorting the energy storage sub-modules on the first side of the first node according to a descending order of their measured SOCs, and obtain a fourth sequence by sorting the energy storage sub-modules on the second side of the first node according to a descending order of their measured SOCs.

(5b2) The control apparatus may select the first n1 energy storage sub-modules in the third sequence as target engaged sub-modules and control these target engaged sub-modules to be in a connected state, and select the first n2 energy storage sub-modules in the fourth sequence as target engaged sub-modules and control these target engaged sub-modules to be in a connected state.

It should be noted that the implementation principles and technical effects of the steps in the embodiments of the present application are similar to the related content in the above embodiments, and details are not be repeated here.

It should be understood that although the steps in the flowcharts involved in the above embodiments are sequentially displayed as indicated by arrows, these steps are not necessarily executed in the order indicated by the arrows. Unless explicitly stated herein, there is no strict order restriction on the execution of these steps, and these steps may be executed in other orders. Moreover, at least some of the steps in the flowcharts involved in the above embodiments may include a plurality of steps or a plurality of stages, which are not necessarily executed at the same time but may be executed at different times, and the execution order of these steps or stages is not necessarily sequential but may be executed alternately or in rotation with other steps or at least a part of the steps or stages in other steps.

Based on the same inventive concept, embodiments of the present application further provide a control apparatus for implementing the control method for the energy storage apparatus described above. The solution to the problem provided by this apparatus is similar to the solution described in the above method, so the specific limitations in one or more control apparatus embodiments for the energy storage apparatus provided below may refer to the limitations of the control method for the energy storage apparatus above, and details are not be repeated here.

In some embodiments, FIG. 19 is a schematic structural diagram of a control apparatus for an energy storage apparatus according to some embodiments of the present application. The energy storage apparatus in the embodiments of the present application may be the energy storage apparatus in the above high-voltage direct-mount energy storage system embodiments. The specific structure of the energy storage apparatus may refer to the related content in the above embodiments, and details are not be repeated here. As shown in FIG. 19, the control apparatus for the energy storage apparatus of the embodiments of the present application may include: a first acquisition module 1901, a second acquisition module 1902, and a control module 1903.

The first acquisition module 1901 is configured to acquire an expected voltage of the energy storage apparatus.

The second acquisition module 1902 is configured to acquire measured voltages of at least two energy storage sub-modules connected to a first energy storage main line of the energy storage apparatus.

The control module 1903 is configured to control target engaged energy storage sub-modules on two sides of a first node in the first energy storage main line to be in a connected state based on the expected voltage and the measured voltages of at least two energy storage sub-modules, where a difference between the total voltage magnitudes of the target engaged energy storage sub-modules on the two sides of the first node is less than a preset threshold, and a difference between a total voltage and the expected voltage of the energy storage apparatus is less than a preset difference.

In some embodiments, the control module 1903 includes:

a determination unit, configured to determine the number of target engaged energy storage sub-modules on a first side of the first node and the number of target engaged energy storage sub-modules on a second side of the first node based on the expected voltage and the measured voltages of the energy storage sub-modules; and
a control unit, configured to control the target engaged energy storage sub-modules on the two sides of the first node in the first energy storage main line to be in a connected state based on the number of target engaged energy storage sub-modules on the first side of the first node and the number of target engaged energy storage sub-modules on the second side of the first node.

In some embodiments, the determination unit is specifically configured to:

determine a first average voltage of the energy storage sub-modules based on the measured voltages of the energy storage sub-modules when a deviation percentage of the measured voltages of each energy storage sub-module is less than 10%;
determine a total number of target engaged energy storage sub-modules on the two sides of the first node based on the expected voltage and the first average voltage; and
determine the number of target engaged energy storage sub-modules on the first side of the first node and the number of target engaged energy storage sub-modules on the second side of the first node based on the total number.

In some embodiments, the determination unit is specifically configured to:

under the condition that the total number is even, determine that the number of target engaged energy storage sub-modules on the first side of the first node and the number of target engaged energy storage sub-modules on the second side of the first node are both equal to one-half of the total number; and
under the condition that the total number is odd, determine that the number of target engaged energy storage sub-modules on the first side of the first node and the number of target engaged energy storage sub-modules on the second side of the first node are respectively equal to respective different values of one-half of a difference between the total number and a preset value and one-half of a sum of the total number and the preset value.

In some embodiments, the determination unit is specifically configured to:

determine a second average voltage of the energy storage sub-modules on the first side based on the measured voltages of the energy storage sub-modules on the first side of the first node when the deviation percentage of the measured voltages of each energy storage sub-module on the first side of the first node is less than 10%; and

determine the number of target engaged energy storage sub-modules on the first side of the first node based on the expected voltage and the second average voltage.

In some embodiments, the determination unit is specifically configured to:

determine a third average voltage of the energy storage sub-modules on the second side based on the measured voltages of the energy storage sub-modules on the second side of the first node when the deviation percentage of the measured voltages of each energy storage sub-module on the second side of the first node is less than 10%; and

determine the number of target engaged energy storage sub-modules on the second side of the first node based on the expected voltage and the third average voltage.

In some embodiments, the control unit is specifically configured to:

acquire a charge-discharge state of the energy storage apparatus and a measured SOC of each of the energy storage sub-modules; and

control the target engaged energy storage sub-modules on the two sides of the first node in the first energy storage main line to be in a connected state based on the number of target engaged energy storage sub-modules on the first side of the first node, the number of target engaged energy storage sub-modules on the second side of the first node, the charge-discharge state of the energy storage apparatus, and the measured SOC of each of the energy storage sub-modules.

In some embodiments, the control unit is specifically configured to:

when the charge-discharge state of the energy storage apparatus is a charging state, select the first n1 energy storage sub-modules on the first side of the first node as target engaged sub-modules according to an ascending order of measured SOCs of the energy storage sub-modules on the first side of the first node, and control each of the target engaged sub-modules to be in a connected state, where n1 is the number of target engaged energy storage sub-modules on the first side of the first node; and select the first n2 energy storage sub-modules on the second side of the first node as target engaged sub-modules according to an ascending order of measured SOCs of the energy storage sub-modules on the second side of the first node, and control each of the target engaged sub-modules to be in a connected state, where n2 is the number of target engaged energy storage sub-modules on the second side of the first node.

In some embodiments, the control unit is specifically configured to:

when the charge-discharge state of the energy storage apparatus is a discharging state, select the first n1 energy storage sub-modules on the first side of the first node as target engaged sub-modules according to a descending order of measured SOCs of the energy storage sub-modules on the first side of the first node, and control each of the target engaged sub-modules to be in a connected state; and

select the first n2 energy storage sub-modules on the second side of the first node as target engaged sub-modules according to a descending order of measured SOCs of the energy storage sub-modules on the second side of the first node, and control each of the target engaged sub-modules to be in a connected state.

The control apparatus for the energy storage apparatus provided in the embodiments of the present application can be used to execute the technical solutions in the embodiments of the control method for the energy storage apparatus described above, and its implementation principles and technical effects are similar, which will not be repeated here.

All or some of the modules in the control apparatus for the energy storage apparatus described above may be implemented by software, hardware, or a combination thereof. Each of the above modules may be embedded in or separated from the processor in the control apparatus in the form of hardware, or may be stored in a memory in the control apparatus in the form of software, so that the processor can call and execute the operations corresponding to each of the above modules.

In some embodiments, a control apparatus for an energy storage apparatus is further provided, including a memory and a processor, the memory storing a computer program, and the processor implementing the technical solutions in the embodiments of the control method for the energy storage apparatus described above when executing the computer program, with similar implementation principles and technical effects, and details are not be repeated here.

In some embodiments, a computer-readable storage medium is further provided, on which a computer program is stored. When executed by a processor, the computer program implements the technical solutions in the embodiments of the control method for the energy storage apparatus described above, with similar implementation principles and technical effects, and details are not be repeated here.

In some embodiments, a computer program product is also provided, including a computer program, the computer program implementing the technical solutions in the embodiments of the control method for the energy storage apparatus described above when executed by a processor, with similar implementation principles and technical effects, which will not be repeated here.

Those of ordinary skill in the art can understand that all or part of the processes in the methods of the above embodiments can be implemented by a computer program instructing relevant hardware. The computer program may be stored in a non-volatile computer-readable storage medium. When executed, the computer program may include the processes of the embodiments of the methods described above. Any reference to memory, database, or other media used in the embodiments provided in the present application may include at least one of non-volatile and volatile memory. Non-volatile memory may include read-only memory (Read-Only Memory, ROM), magnetic tape, floppy disk, flash memory, optical memory, high-density embedded non-volatile memory, resistive random access memory (ReRAM), magnetoresistive random access memory (Magnetoresistive Random Access Memory, MRAM), ferroelectric random access memory (Ferroelectric Random Access Memory, FRAM), phase change memory (Phase Change Memory, PCM), graphene memory, and the like. Volatile memory may include random access memory (Random Access Memory, RAM) or external cache memory, and the like. By way of illustration and not limitation, RAM can be in various forms, such as static random access memory (Static Random Access Memory, SRAM) or dynamic random access memory (Dynamic Random Access Memory, DRAM). The processors involved in the embodiments provided in the present application may be general-purpose processors, central processing units, graphics processing units, digital signal processors, programmable logic devices, data processing logic devices based on quantum computing, and the like, and are not limited thereto.

Finally, it should be noted that the above embodiments are only used to illustrate the technical solutions of the present application and not to limit them; although the present application has been described in detail with reference to the foregoing embodiments, those of ordinary skill in the art should understand that they can still modify the technical solutions described in the foregoing embodiments or make equivalent replacements for some or all of the technical features; and these modifications or replacements do not make the essence of the corresponding technical solutions depart from the scope of the technical solutions of the embodiments of the present application, and they should all be covered within the scope of the claims and specification of the present application. In particular, provided that there is no structural conflict, the technical features mentioned in each embodiment can be combined in any way. The present application is not limited to the specific embodiments disclosed herein but includes all technical solutions falling within the scope of the claims.

**Claims**

1. A high-voltage direct-mount energy storage system, comprising:

   a clamping circuit, comprising a first clamping branch and a second clamping branch; an energy storage apparatus, comprising a first energy storage main line and at least two energy storage sub-modules connected to the first energy storage main line, with both ends of the first energy storage main line respectively connected to the clamping circuit; and at least one dielectric branch, with one end of the dielectric branch connected to at least one of the energy storage sub-modules and the other end coupled to a reference ground; and further comprising a first node disposed on the first energy storage main line and a first grounding circuit connected to the first node, with a resistance value of the first grounding circuit being less than a preset resistance threshold; and
   a control apparatus, configured to control target engaged energy storage sub-modules on the two sides of the first node to be in a connected state based on an expected voltage of the energy storage apparatus and measured voltages of at least two energy storage sub-modules connected to the first energy storage main line, wherein a difference between the total voltage magnitudes of the target engaged energy storage sub-modules on the two sides of the first node is less than a preset threshold, and a difference between a total voltage and the expected voltage of the energy storage apparatus is less than a preset difference.

2. The high-voltage direct-mount energy storage system according to claim 1, wherein a total voltage magnitude of the energy storage sub-modules on each side of the first node is greater than or equal to one-half of the expected voltage of the energy storage apparatus.

3. The high-voltage direct-mount energy storage system according to claim 1 or 2, wherein a deviation percentage of the measured voltages of each energy storage sub-module is less than 10%, and the numbers of the target engaged energy storage sub-modules on the two sides of the first node are equal or differ by 1.

4. The high-voltage direct-mount energy storage system according to any one of claims 1 to 3, wherein the first grounding circuit is a wire, or comprises a grounding resistor or a grounding reactor.

5. The high-voltage direct-mount energy storage system according to any one of claims 1 to 4, wherein the preset resistance threshold is a product of a resistance value of the first clamping branch and 0.02; optionally, the preset resistance threshold is a product of the resistance value of the first clamping branch and 0.001.

6. The high-voltage direct-mount energy storage system according to any one of claims 1 to 5, wherein the first grounding circuit further comprises a current detection unit.

7. The high-voltage direct-mount energy storage system according to any one of claims 1 to 6, wherein the energy storage apparatus further comprises at least one second energy storage main line and at least two energy storage sub-modules connected to the second energy storage main line, the second energy storage main line being connected in parallel with the first energy storage main line.

8. The high-voltage direct-mount energy storage system according to claim 7, wherein the energy storage apparatus further comprises a second node disposed on the second energy storage main line and a second grounding circuit connected to the second node, a resistance value of the second grounding circuit being less than the preset resistance threshold.

9. The high-voltage direct-mount energy storage system according to claim 8, wherein a total voltage magnitude of the energy storage sub-modules on each side of the second node is greater than or equal to one-half of the expected voltage of the energy storage apparatus.

10. The high-voltage direct-mount energy storage system according to any one of claims 1 to 9, wherein the high-voltage direct-mount energy storage system further comprises a converter valve, a positive direct-current bus, and a negative direct-current bus, with a first end of the converter valve connected to the positive direct-current bus, a second end of the converter valve connected to the negative direct-current bus, a third end of the converter valve connected to an alternating-current grid, and both ends of the first energy storage main line respectively connected to the positive direct-current bus and the negative direct-current bus.

11. The high-voltage direct-mount energy storage system according to any one of claims 1 to 10, wherein the dielectric branch comprises at least one of a cooling branch, a fire-fighting branch, and a heat-transfer medium branch.

12. A control method for an energy storage apparatus, wherein the energy storage apparatus is the energy storage apparatus in the high-voltage direct-mount energy storage system according to any one of claims 1 to 11, and the method comprises:

acquiring an expected voltage of the energy storage apparatus;
acquiring measured voltages of at least two energy storage sub-modules connected to a first energy storage main line of the energy storage apparatus; and
controlling target engaged energy storage sub-modules on two sides of a first node in the first energy storage main line to be in a connected state based on the expected voltage and the measured voltages of at least two energy storage sub-modules, wherein a difference between the total voltage magnitudes of the target engaged energy storage sub-modules on the two sides of the first node is less than a preset threshold, and a difference between a total voltage and the expected voltage of the energy storage apparatus is less than a preset difference.

13. The method according to claim 12, wherein the controlling target engaged energy storage sub-modules on the two sides of the first node in the first energy storage main line to be in a connected state based on the expected voltage and the measured voltages of at least two energy storage sub-modules comprises:

determining the number of target engaged energy storage sub-modules on a first side of the first node and the number of target engaged energy storage sub-modules on a second side of the first node based on the expected voltage and the measured voltages of the energy storage sub-modules; and
controlling the target engaged energy storage sub-modules on the two sides of the first node in the first energy storage main line to be in a connected state based on the number of target engaged energy storage sub-modules on the first side of the first node and the number of target engaged energy storage sub-modules on the second side of the first node.

**14.** The method according to claim 13, wherein the determining the number of target engaged energy storage sub-modules on a first side of the first node and the number of target engaged energy storage sub-modules on a second side of the first node based on the expected voltage and the measured voltages of each energy storage sub-module comprises:

determining a first average voltage of the energy storage sub-modules based on the measured voltages of the energy storage sub-modules when a deviation percentage of the measured voltages of each energy storage sub-module is less than 10%;

determining a total number of target engaged energy storage sub-modules on the two sides of the first node based on the expected voltage and the first average voltage; and

determining the number of target engaged energy storage sub-modules on the first side of the first node and the number of target engaged energy storage sub-modules on the second side of the first node based on the total number.

**15.** The method according to claim 14, wherein the determining the number of target engaged energy storage sub-modules on the first side of the first node and the number of target engaged energy storage sub-modules on the second side of the first node based on the total number comprises:

under the condition that the total number is even, determining that the number of target engaged energy storage sub-modules on the first side of the first node and the number of target engaged energy storage sub-modules on the second side of the first node are both equal to one-half of the total number; and

under the condition that the total number is odd, determining that the number of target engaged energy storage sub-modules on the first side of the first node and the number of target engaged energy storage sub-modules on the second side of the first node are equal to respective different values of one-half of a difference between the total number and a preset value and one-half of a sum of the total number and the preset value.

**16.** The method according to claim 13, wherein the determining the number of target engaged energy storage sub-modules on a first side of the first node based on the expected voltage and the measured voltages of the energy storage sub-modules comprises:

when a deviation percentage of the measured voltages of each energy storage sub-module on the first side of the first node is less than 10%,

determining a second average voltage of the energy storage sub-modules on the first side based on the measured voltages of the energy storage sub-modules on the first side of the first node; and

determining the number of target engaged energy storage sub-modules on the first side of the first node based on the expected voltage and the second average voltage.

**17.** The method according to claim 13, wherein the determining the number of target engaged energy storage sub-modules on the second side of the first node based on the expected voltage and the measured voltages of the energy storage sub-modules comprises:

determining a third average voltage of the energy storage sub-modules on the second side based on the measured voltages of the energy storage sub-modules on the second side of the first node when a deviation percentage of the measured voltages of each energy storage sub-module on the second side of the first node is less than 10%; and

determining the number of target engaged energy storage sub-modules on the second side of the first node based on the expected voltage and the third average voltage.

**18.** The method according to any one of claims 13 to 17, wherein the controlling the target engaged energy storage sub-modules on the two sides of the first node in the first energy storage main line to be in a connected state based on the number of target engaged energy storage sub-modules on the first side of the first node and the number of target engaged energy storage sub-modules on the second side of the first node comprises:

acquiring a charge-discharge state of the energy storage apparatus and a measured SOC of each of the energy storage sub-modules; and

controlling the target engaged energy storage sub-modules on the two sides of the first node in the first energy storage main line to be in a connected state based on the number of target engaged energy storage sub-modules on the first side of the first node, the number of target engaged energy storage sub-modules on the second side of the first node, the charge-discharge state of the energy storage apparatus, and the measured SOC of each of the energy storage sub-modules.

**19.** The method according to claim 18, wherein the controlling the target engaged energy storage sub-modules on the two sides of the first node in the first energy storage main line to be in a connected state based on the number of target engaged energy storage sub-modules on the first side of the first node, the number of target engaged energy storage sub-modules on the second side of the first node, the charge-discharge state of the energy storage apparatus, and the measured SOC of each of the energy storage sub-modules comprises:

when the charge-discharge state of the energy storage apparatus is a charging state, selecting the first n1 energy storage sub-modules on the first side of the first node as target engaged sub-modules according to an ascending order of measured SOCs of the energy storage sub-modules on the first side of the first node, and controlling each of the target engaged sub-modules to be in a connected state, wherein n1 is the number of target engaged energy storage sub-modules on the first side of the first node; and selecting the first n2 energy storage sub-modules on the second side of the first node as target engaged sub-modules according to an ascending order of measured SOCs of the energy storage sub-modules on the second side of the first node, and controlling each of the target engaged sub-modules to be in a connected state, wherein n2 is the number of target engaged energy storage sub-modules on the second side of the first node.

20. The method according to claim 18, wherein the controlling the target engaged energy storage sub-modules on the two sides of the first node in the first energy storage main line to be in a connected state based on the number of target engaged energy storage sub-modules on the first side of the first node, the number of target engaged energy storage sub-modules on the second side of the first node, the charge-discharge state of the energy storage apparatus, and the measured SOC of each of the energy storage sub-modules comprises:

when the charge-discharge state of the energy storage apparatus is a discharging state, selecting the first n1 energy storage sub-modules on the first side of the first node as target engaged sub-modules according to a descending order of measured SOCs of the energy storage sub-modules on the first side of the first node, and controlling each of the target engaged sub-modules to be in a connected state; and selecting the first n2 energy storage sub-modules on the second side of the first node as target engaged sub-modules according to a descending order of measured SOCs of the energy storage sub-modules on the second side of the first node, and controlling each of the target engaged sub-modules to be in a connected state.

21. A control apparatus for an energy storage apparatus, wherein the energy storage apparatus is the energy storage apparatus in the high-voltage direct-mount energy storage system according to any one of claims 1 to 11, and the control apparatus comprises:

a first acquisition module, configured to acquire an expected voltage of the energy storage apparatus; a second acquisition module, configured to acquire measured voltages of at least two energy storage sub-modules connected to a first energy storage main line of the energy storage apparatus; and a control module, configured to control target engaged energy storage sub-modules on two sides of a first node in the first energy storage main line to be in a connected state based on the expected voltage and the measured voltages of at least two energy storage sub-modules, wherein a difference between the total voltage magnitudes of the target engaged energy storage sub-modules on the two sides of the first node is less than a preset threshold, and a difference between a total voltage and the expected voltage of the energy storage apparatus is less than a preset difference.

FIG. 1

FIG. 2

FIG. 3

FIG. 4

FIG. 5

FIG. 6

Positive direct-current bus

XL1

311

312

301

First clamping branch

Energy storage sub-module #1

Energy storage sub-module #2

302

Second clamping branch

314

Energy storage sub-module #N/2

Rg

GP1

Energy storage sub-module #N/2+1

Energy storage sub-module #N-1

Energy storage sub-module #N

Negative direct-current bus

FIG. 7

FIG. 8

**FIG. 9**

FIG. 10

FIG. 11

FIG. 12

S1301

Acquire an expected voltage of an energy storage apparatus

S1302

Acquire measured voltages of at least two energy storage sub-modules connected to a first energy storage main line of the energy storage apparatus

S1303

Control target engaged energy storage sub-modules on two sides of a first node in the first energy storage main line to be in connected state based on the expected voltage and the measured voltages of the at least two energy storage sub-modules, where a difference between total voltage magnitudes of the target engaged energy storage sub-modules on the two sides of the first node is less than a preset threshold, and a difference between a total voltage and the expected voltage of the energy storage apparatus is less than a preset difference

FIG. 13

S1303A

Determine the number of target engaged energy storage sub-modules on a first side of a first node and the number of target engaged energy storage sub-modules on a second side of the first node based on the expected voltage and the measured voltages of the energy storage sub-modules

S1303B

Control the target engaged energy storage sub-modules on the two sides of the first node in a first energy storage main line to be in a connected state based on the number of target engaged energy storage sub-modules on the first side of the first node and the number of target engaged energy storage sub-modules on the second side of the first node

FIG. 14

S1501

Determine a first average voltage of energy storage sub-modules based on measured voltages of the energy storage sub-modules when a deviation percentage of the measured voltages of each energy storage sub-module is less than 10%

S1502

Determine a total number of target engaged energy storage sub-modules on two sides of a first node based on an expected voltage and the first average voltage

S1503

Determine the number of target engaged energy storage sub-modules on a first side of the first node and the number of target engaged energy storage sub-modules on a second side of the first node based on the total number

FIG. 15

S 1601

Determine a second average voltage of energy storage sub-modules on a first side based on measured voltages of the energy storage sub-modules on the first side of a first node when a deviation percentage of measured voltages of each energy storage sub-module on the first side of the first node is less than 10%

S1602

Determine the number of target engaged energy storage sub-modules on the first side of the first node based on an expected voltage and the second average voltage

FIG. 16

S1701

Determine a third average voltage of energy storage sub-modules on a second side based on measured voltages of the energy storage sub-modules on the second side of a first node when a deviation percentage of the measured voltages of each energy storage sub-module on the second side of the first node is less than 10%

S1702

Determine the number of target engaged energy storage sub-modules on the second side of the first node based on an expected voltage and the third average voltage

FIG. 17

S 1801

Acquire a charge-discharge state of an energy storage apparatus and a measured SOC of each of energy storage sub-modules

S1802

Control target engaged energy storage sub-modules on two sides of a first node in a first energy storage main line to be in a connected state based on the number of target engaged energy storage sub-modules on a first side of the first node, the number of target engaged energy storage sub-modules on a second side of the first node, the charge-discharge state of the energy storage apparatus, and the measured SOC of each of the energy storage sub-modules

FIG. 18

Control apparatus for energy storage apparatus

1901

First acquisition module

1902

Second acquisition module

1903

Control module

FIG. 19

## INTERNATIONAL SEARCH REPORT

| International application No. |
| --- |
| **PCT/CN2024/119855** |

| A. | CLASSIFICATION OF SUBJECT MATTER |
| --- | --- |

H02J3/32(2006.01)i

According to International Patent Classification (IPC) or to both national classification and IPC

| B. | FIELDS SEARCHED |
| --- | --- |

Minimum documentation searched (classification system followed by classification symbols)

IPC: H02J

Documentation searched other than minimum documentation to the extent that such documents are included in the fields searched

Electronic data base consulted during the international search (name of data base and, where practicable, search terms used)

CNTXT: CNABS; ENTXT; ENTXTC; CNKI; IEEE: 直挂, 储能, 模块, 接地, 钳位, 漏电流, 电阻, 稳定, direct w hanging, energy storage, sub w module, SM, ground, clamp, leakage current, resistor

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 114447970 A (SHANGHAI JIAO TONG UNIVERSITY et al.) 06 May 2022 (2022-05-06) <br> description, paragraphs 52-83, and figures 1-6 | 1-21 |
| A | CN 113848507 A (CHINA SOUTHERN POWER GRID PEAK SHAVING AND FREQUENCY MODULATION POWER GENERATION CO., LTD. et al.) 28 December 2021 (2021-12-28) <br> entire document | 1-21 |
| A | CN 113852111 A (CHINA ELECTRIC POWER RESEARCH INSTITUTE CO., LTD.) 28 December 2021 (2021-12-28) <br> entire document | 1-21 |
| A | CN 115912316 A (XI'AN XD HIGH VOLTAGE APPARATUS CO., LTD. et al.) 04 April 2023 (2023-04-04) <br> entire document | 1-21 |
| A | WO 2022053020 A1 (NR ELECTRIC CO., LTD. et al.) 17 March 2022 (2022-03-17) <br> entire document | 1-21 |

☐ Further documents are listed in the continuation of Box C.     ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **17 December 2024** | **23 December 2024** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/119855**

| Patent document cited in search report | | | Publication date (day/month/year) | Patent family member(s) | | | Publication date (day/month/year) |
|---|---|---|---|---|---|---|---|
| CN | 114447970 | A | 06 May 2022 | CN | 114447970 | B | 25 October 2022 |
| | | | | US | 2023238803 | A1 | 27 July 2023 |
| | | | | US | 12095268 | B2 | 17 September 2024 |
| CN | 113848507 | A | 28 December 2021 | CN | 113848507 | B | 20 August 2024 |
| CN | 113852111 | A | 28 December 2021 | CN | 11385211 | B | 18 March 2022 |
| | | | | WO | 2023092675 | A1 | 01 June 2023 |
| CN | 115912316 | A | 04 April 2023 | | None | | |
| WO | 2022053020 | A1 | 17 March 2022 | EP | 4184742 | A1 | 24 May 2023 |
| | | | | EP | 4184742 | A4 | 28 August 2024 |
| | | | | CN | 112086993 | A | 15 December 2020 |
| | | | | CN | 112086993 | B | 14 January 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023112138261